Europäisches Patentamt

(19) European Patent Office

Office européen des brevets

(11) Numéro de publication: **0 115 097 B1**

(12) **FASCICULE DE BREVET EUROPEEN**

(45) Date de publication du fascicule du brevet: **03.06.87**

(21) Numéro de dépôt: **83201780.0**

(22) Date de dépôt: **15.12.83**

(51) Int. Cl.⁴: **G 06 F 7/58, H 04 N 7/16**

(54) **Générateur de séquences numériques pseudoaléatoires.**

(30) Priorité: **20.12.82 FR 8221361**
**22.08.83 FR 8313540**

(43) Date de publication de la demande:
**08.08.84 Bulletin 84/32**

(45) Mention de la délivrance du brevet:
**03.06.87 Bulletin 87/23**

(84) Etats contractants désignés:
**DE FR GB**

(56) Documents cités:
**DE-A-2 547 937**
**FR-A-2 431 809**
**IEEE TRANSACTIONS ON INFORMATION THEORY, vol. IT-17, no. 3, mai 1971, pages 288-296, New York, US E.J. GROTH: "Generation of binary sequences with controllable complexity"**

**IEEE TRANSACTIONS ON COMPUTERS, vol. C-22, no. 10, octobre 1973, pages 962-964, New York, US D.G. MARITSAS: "The autocorrelation function of the two feedback shift-register pseudorandom source"**

(73) Titulaire: **S.A. La Radiotechnique Industrielle et Commerciale**
**51 Rue Carnot**
**F-92150 Suresnes (FR)**

(72) Inventeur: **Arragon, Jean-Pierre Société Civile S.P.I.D.**
**209 rue de l'Université**
**F-75007 Paris (FR)**
Inventeur: **Cantou, Christian Société Civile S.P.I.D.**
**209 rue de l'Université**
**F-75007 Paris (FR)**
Inventeur: **Marie, Gérard Société Civile S.P.I.D.**
**209 rue de l'Université**
**F-75007 Paris (FR)**

(74) Mandataire: **Charpail, François et al**
**Société Civile S.P.I.D. 209, rue de l'Université**
**F-75007 Paris (FR)**

(56) References cited:
**IEEE TRANSACTIONS ON INFORMATION THEORY, vol. IT-22, no. 6, novembre 1976, pages 732-736, New York, US E.L. KEY: "An analysis of the structure and complexity of nonlinear binary sequence generators"**

Courier Press, Leamington Spa, England.

EP 0 115 097 B1

# 0 115 097

**Description**

La présente invention concerne un générateur de séquences numériques pseudoaléatoires, applicable en particulier au chiffrement d'images de télévision.

Le principe du chiffrage d'images de télévision consiste à effectuer une coupure de chaque ligne d'image en un point dont l'adresse est aléatoire, puis à réaliser une permutation circulaire des segments situés de part et d'autre du point de coupure. Ce principe de chiffrage a été décrit dans la demande de brevet FR—A—2431809 déposée le 20 juillet 1978 au nom de l'Etablissement Public de Diffusion dit "Télédiffusion de France" dans le cas où il s'applique à un signal vidéo noir et blanc ou couleur composite à multiplexage en fréquences, de type SECAM, PAL ou NTSC par exemple. La demande de brevet EP—A—0103339 avec priorité de 14 septembre 1982 au nom de la société La Radiotechnique décrit une application nouvelle de ce principe à un signal vidéo couleur à multiplexage temporel des composantes analogiques, de type MAC par exemple. Dans ce dernier cas, les différentes composantes sont traitées séparément, c'est-à-dire subissent chacune séparément les opérations de coupure et de permutation. Les adresses de points de coupure à fournir doivent alors être en nombre égal à celui des composantes: deux dans le cas du codage MAC (la luminance Y et, alternativement, l'une ou l'autre des composantes de différence de couleur U et V), trois dans le cas où l'on transmet à chaque ligne les trois composantes Y, U et V, etc...

Les adresses des points de coupure sont fournies par un générateur de séquences numériques pseudo-aléatoires fonctionnant avec une horloge à la fréquence ligne et varient donc pseudo-aléatoirement d'une ligne à la suivante. Des générateurs identiques sont utilisés à l'émission et à la réception, et la synchronisation entre émission et réception peut se faire soit à chaque trame d'image, soit après un nombre entier de trames (toutes les 50 trames par exemple, c'est-à-dire toutes les secondes en Europe), en prévoyant une impulsion de synchronisation transmise par l'émetteur dans une ligne spéciale de l'image (la dernière ligne d'une trame par exemple) ou dans la voie de transmission des données pendant les retours de trame (voir les systèmes dits Teletext, DIDON, etc). Les générateurs utilisés à l'émission et à la réception sont initialisés par une clé de départ, comportant un certain nombre $n_d$ de bits, et l'utilisateur peut soit acheter directement cette clé sous forme d'une carte de clé passive, soit acheter le moyen de déchiffrer une clé chiffrée transmise par l'émetteur dans la voie de diffusion de données. Cette dernière solution permet un changement aussi fréquent que l'on veut de la clé et donc une plus grande sécurité du système, mais implique, à la réception, l'emploi d'un circuit d'initialisation actif utilisant une carte d'accès passive ou active (à mémoire ou à microprocesseur).

Lorsqu'on veut réaliser un système de chiffrage d'images de télévision, il est très important de tenir compte des propriétés de l'oeil en matière de reconnaissance de formes. On constate par exemple que, si les lignes d'image sont décalées l'une par rapport à l'autre de moins de 1 cm pour une image de largeur totale 52 cm (il s'agit là de la largeur donnée par les téléviseurs actuels utilisant des tubes cathodiques de 66 ou 67 cm de diagonale), l'image est parfaitement interprétable et n'apparaît que comme simplement floue lorsqu'elle est observée à une distance suffisante. Si les adresses de coupure sont au contraire telles que les décalages de ligne qu'elles entraînent ont des valeurs de l'ordre de 2 à 30 cm, réparties de façon erratique, l'image apparaît comme étalée sur toute sa largeur et difficilement interprétable. Mais si, en moyenne, le même décalage se reproduit plus de 10% du temps, l'oeil est capable, dans le cas d'images à structure simple (un gros plan par exemple), de reconnaître cette image qui apparaît sur un fond brouillé. On déduit de cette dernière remarque que le nombre de positions de points de coupure possibles doit être nettement supérieur à 10 pour qu'aucune des positions n'ait plus de 10% de chances d'être occupée. Il faudrait donc exprimer les adresses avec des séquences numériques ayant un nombre de bits significatifs indépendants égal au moins à 4. Par ailleurs, la première remarque montre qu'il n'est pas nécessaire, du simple point de vue de l'observation visuelle, que le nombre de bits de ces séquences dépasse 6, puisque $52 \text{ cm}/2^6 = 0{,}8 \text{ cm}$.

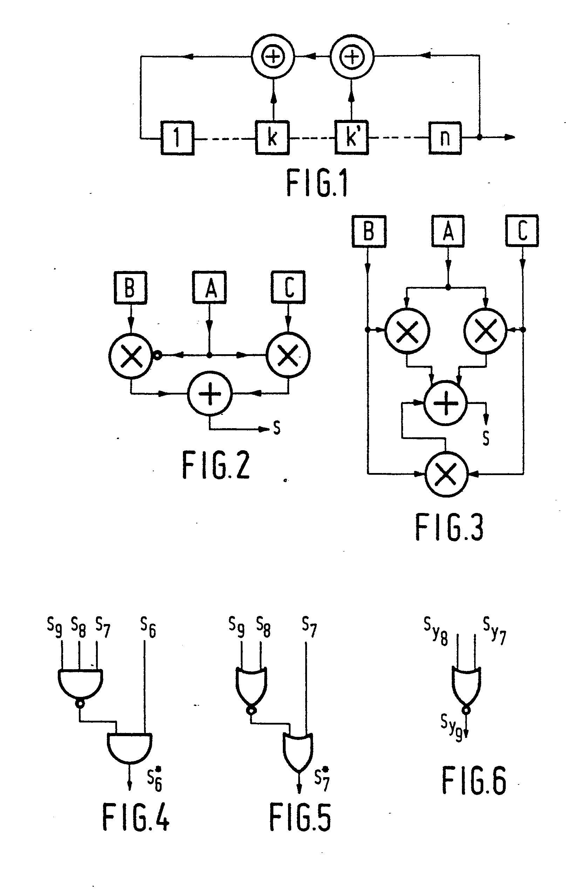

Un générateur de séquences numériques pseudoaléatoires classique comprend, dans sa version la plus simple, un registre à décalage à n étages numérotés de 1 à n de l'entrée vers la sortie (voir la figure 1), comportant au moins une sortie intermédiaire de rang k dont le résultat de l'addition modulo 2 avec la sortie de rang n est rebouclé à l'entrée. Le polynôme générateur de ce circuit s'écrit:

$$x^n + x^{n-k} + x^{n-k'} \ldots + 1 = 0 \qquad (1)$$

Lorsque ce polynôme est irréductible et primitif, le générateur délivre une séquence pseudo-aléatoire de longueur maximale égale à $2^n - 1$, qui comprend toutes les combinaisons possibles de n bits à l'exception de celle composée de n zéros consécutifs qui provoquerait le blocage du système, celui-ci ne délivrant plus que des zéros.

L'utilisation de ce type de générateur présente cependant deux inconvénients en matière d'efficacité du chiffrage:

(1) pour obtenir une adresse comportant un nombre R de bits égal au moins à 4, il faut soit prévoir un nombre R de sorties du registre en utilisant des prises intermédiaires, soit faire fonctionner le registre avec une horloge dont la fréquence est égale au produit de R par la fréquence ligne $f_l$. Dans les deux cas, les sorties successives, spatiales ou temporelles, sont très fortement corrélées puisqu'elles se déduisent les

2

# 0 115 097

unes des autres par une simple translation dans le registre, ce qui facilite beaucoup le décryptage lorsqu'on ne connaît pas la clé. On peut remarquer que, lorsque R est inférieur ou égal au nombre de cellules n du registre et lorsqu'il n'est pas un diviseur de la longueur $2^n-1$ de la séquence, les deux solutions, spatiale et temporelle, sont équivalentes car, en R séquences successives, chaque sortie temporelle fournit tous les bits de la séquence. On aura tout intérêt, en général, à utiliser une solution spatiale qui demande la fréquence d'horloge la plus basse, égale à la fréquence de balayage ligne $f_l$.

(2) on peut retrouver la séquence complète fournie par un générateur de séquences pseudoaléatoires de ce type en résolvant un système de n équations linéaires à n inconnues lorsque l'on connaît n valeurs d'adresses, ce qui peut se faire si l'on réussit à identifier la position de n lignes dans l'image, en repérant par exemple un élément d'image comportant un trait vertical bien isolé.

Pour rémédier à ce dernier inconvénient, il est possible d'utiliser des opérations non linéaires en plus de l'addition modulo 2 (voir l'article de P. R. Geffe, "How to protect data with ciphers that are really hard to break", paru dans la revue Electronics, 4 janvier 1973, pages 99 à 101). Une version particulièrement intéressante d'un tel circuit, appelée générateur de Geffe et décrite notamment dans l'article de E. L. Key, "An analysis of the structure and complexity of nonlinear binary sequence generators", paru dans la revue IEEE Transactions on Information Theory, volume IT-22, n° 6, novembre 1976, pages 732 à 736, consiste à utiliser trois registres A, B, C, en se servant par exemple de la sortie a du premier registre pour commuter la sortie du système soit sur la sortie b du deuxième registre, soit sur la sortie c du troisième. La figure 2 représente ce générateur dont l'équation logique peut s'écrire:

$$S = \overline{a}b + ac \qquad\qquad (2)$$

(on rappelle au tableau 1 de la page 17 les tables de vérité des principales opérations logiques: addition logique a+b, produit logique ab, et addition modulo 2 ou OU exclusif a⊕b, cette dernière opération pouvant s'écrire $a \oplus b = \overline{a}b + a\overline{b}$ en notant $\overline{a}$ et $\overline{b}$ les compléments à 1 de a et b).

Ce générateur de Geffe présente deux avantages importants. D'une part, sa sortie comporte une distribution moyenne égale de 0 et de 1, ce qui est très rarement le cas lorsqu'on introduit des opérations logiques de type produit. D'autre part, pour décrypter ce dispositif sans connaître la clé, il faudrait résoudre un système de $n_d$ équations, avec $n_d = n_a + n_b + n_c$ ($n_a$, $n_b$, $n_c$ désignant le nombre d'étages des registres A, B et C respectivement), mais ces équations sont non linéaires et la résolution du système est difficile. Il a bien été démontré, dans l'article de E. L. Key déjà cité, que ces $n_d$ équations non linéaires pouvaient être ramenées à un système d'équations linéaires, mais dont le nombre est voisin de $n_a(n_b+n_c)$, nombre beaucoup plus grand que $n_d = n_a + n_b + n_c$.

L'application d'un générateur de Geffe à la réalisation d'un générateur d'adresses pseudoaléatoires pour le chiffrage d'images de télévision présente par ailleurs un avantage supplémentaire en ce sens qu'un dispositif comprenant plusieurs générateurs simples est beaucoup plus intéressant qu'un dispositif à un seul générateur simple comportant le même nombre total $n_d$ d'étages. En effet, au lieu de disposer de $n_d$ sorties corrélées, on dispose de trois jeux non corrélés de sorties que l'on peut combiner entre elles.

Bien entendu, pour qu'un générateur de Geffe soit d'efficacité maximale, les polynômes générateurs des trois registres A, B, C doivent être irréductibles et primitifs, de façon que les séquences de bits a, b, c soient de longueurs maximales, c'est-à-dire égales respectivement à $2^{n_a}-1$, $2^{n_b}-1$, $2^{n_c}-1$, ces trois longueurs devant en outre être premières entre elles pour que la longueur d'une séquence pseudo-aléatoire, combinaison de bits a, b et c, soit maximale et égale à

$$(2^{n_a}-1) \cdot (2^{n_b}-1) \cdot (2^{n_c}-1),$$

produit dont la valeur est de l'ordre de grandeur de $2^{n_d}$.

Les longueurs $n_c$, $n_b$, $n_a$ des trois registres peuvent par exemple être choisies égales respectivement à:

— 3, 4, 5, lorsqu'on a une clé de 12 bits, la longueur de la séquence étant alors voisine de 3 000;
— 3, 4, 7, lorsqu'on a une clé de 14 bits, la longueur de la séquence étant alors voisine de 13 000;
— 3, 5, 7, lorsqu'on a une clé de 15 bits, la longueur de la séquence étant alors voisine de 27 000;
— 3, 5, 8 ou 4, 5, 7, lorsqu'on a une clé de 16 bits, la longueur de la séquence étant alors voisine de 60 000;
— 4, 5, 9 ou 5, 6, 7, lorsqu'on a une clé de 18 bits, la longueur de la séquence étant alors voisine de 240 000;
— 4, 5, 11 ou 5, 7, 8, lorsqu'on a une clé de 20 bits, la longueur de la séquence étant alors voisine de 1 000 000.

L'emploi de générateurs de Geffe combinant les différentes sorties de trois mêmes registres A, B, C pour générer les bits d'adresses des points de coupure en vue du chiffrement d'une image de télévision présente cependant un défaut important: en raison des propriétés de l'oeil en matière de reconnaissance de formes, et en particulier de sa capacité d'identifier une image dont la probabilité de présence est supérieure à 10% environ, on peut, par approximations successives, décrypter le dispositif en cherchant d'abord par essais successifs les $(n_b+n_c)$ bits correspondant au mot de chargement initial des registres B et C, comme il a été démontré à l'aide d'un exemple dans la demande de brevet FR—A—2538192 déposée le 20 décembre 1982 et publiée le 22.06.84, au nom de la société La Radiotechnique.

3

Cette affirmation peut être vérifiée en prenant un exemple, celui d'une clé de 16 bits, en choisissant $n_a=7$, $n_b=5$, $n_c=4$, de façon que l'ordre de complexité des générateurs de Geffe soit de l'ordre de: 7 (4+5)=63. On suppose que l'on connaît les 9 bits de la clé correspondant au mot de départ des registres B et C (4 bits et 5 bits respectivement), et que la sortie du générateur A est inconnue. Pour un bit d'adresse donné, on a donc une chance sur deux d'avoir à la réception la même sortie a qu'à l'émission (et donc d'avoir identité du bit d'adresse correspondant), mais également une chance sur deux que ces bits a soient opposés, ce qui veut dire qu'à l'émission le bit d'adresse choisi est par exemple un bit b, alors que celui choisi à la réception est un bit c. Comme ces deux bits ne sont pas corrélés, on a une chance sur deux qu'ils soient identiques. En moyenne, on a donc, pendant la moitié du temps, une probabilité d'identité de 1 et, pendant l'autre moitié du temps, une probabilité d'identité de 1/2, ce qui donne une probabilité d'identité moyenne égale à 3/4 pour un bit d'adresse.

Dans ce cas de R bits d'adresse calculés à partir de R générateurs de Geffe utilisant des sorties différentes des mêmes trois registres A, B, C, la probabilité d'identité d'une même adresse est donc égale à $(\frac{3}{4})^R$. Comme on a vu plus haut, d'après les propriétés de l'oeil, que le nombre de bits d'adresse significatifs était au plus égal à 6, la probabilité maximale d'identité d'adresse ne peut pas descendre en pratique en dessous de $(\frac{3}{4})^6=0,18$, ce qui donne une image parfaitement identifiable par l'oeil.

En pratique, la situation est encore plus mauvaise car la probabilité de 0,18 correspond au cas où l'on utilise des sorties différentes pour les six bits d'adresse. Cela signifie que l'on a nécessairement employé des générateurs comportant un nombre d'étages au moins égal à 6, et donc un nombre total de bits de clé égal à 21 si l'on se contente d'une séquence non maximale ($n_a=8$, $n_b=7$, $n_c=6$) ou à 24 ($n_a=9$, $n_b=8$, $n_c=7$) si l'on veut une séquence maximale. Dans le cas où l'on choisit $n_b=5$ et $n_c=4$ (clé de 16, 18 ou 20 bits, comme indiqué plus haut), on est obligé de réutiliser, pour le cinquième bit d'adresse, un bit de C déjà utilisé précédemment et, pour le sixième bit d'adresse, deux bits de B et C déjà utilisés, ce qui conduit à une probabilité d'identité de l'ordre de 0,25 pour 6 bits.

Pour décrypter le système de manière frauduleuse et retrouver les 16 bits de la clé, il suffit alors d'opérer en deux étapes: (1) essayer successivement les différentes combinaisons des 9 bits des mots de départ des registres B et C, ce qui demande, au maximum, $2^9=512$ tentatives et, en moyenne, 256 tentatives seulement; (2) une fois trouvés ces 9 bits, essayer successivement les différentes combinaisons des 7 bits restants, ce qui demande, au maximum, $2^7=128$ tentatives et, en moyenne, 64 tentatives. Comme il suffit d'une seconde environ pour l'essai de chaque clé, on peut ainsi retrouver les 16 bits de la clé en 320 secondes en moyenne (256+64), soit environ 5 minutes. Ce délai est à comparer au délai nécessaire pour retrouver 16 bits lorsqu'on ne peut pas le faire en deux étapes: $2^{16}=65\,536$ tentatives au maximum, soit en moyenne, 32 768 tentatives, ce qui demanderait plus de 9 heures à raison d'une tentative par seconde.

Il en résulte que, pour la même difficulté de décryptage par essais successifs de clés, un générateur d'adresses pseudoaléatoires utilisant des générateurs de Geffe demande un nombre de bits de clé entre 1,7 et 2 fois plus grande que celui qui serait nécessaire dans un dispositif n'utilisant pas le principe du générateur de Geffe et ne permettant pas la reconnaissance des bits en deux étapes successives. Par exemple, si l'on estime qu'un temps moyen de l'ordre de deux heures est suffisant pour décourager les tentatives de décryptage, ce temps peut être obtenu sans générateur de Geffe avec une clé de 14 bits, alors qu'avec un générateur de Geffe il faudrait 26 bits si l'on choisit des longueurs des registres A, B et C égales respectivement à 13, 7 et 6.

Un premier objet de l'invention est donc de proposer un générateur de séquences numériques pseudoaléatoires pouvant fournir des adresses d'au moins 4 bits avec des probabilités d'adresses identiques inférieures à 10%, ces adresses étant en même temps beaucoup plus difficiles à décrypter, lorsqu'on ne connaît pas la clé, que celles fournies par les générateurs connus jusqu'à présent, et ledit générateur remédiant simultanément aux inconvénients des générateurs de Geffe lorsque ceux-ci sont appliqués au chiffrement d'images de télévision.

L'invention concerne à cet effet un générateur d'adresses numériques pseudoaléatoires, destiné notamment à fournir des adresses de points de coupure d'un signal vidéo composite, dans le cas d'un système à multiplexage en fréquences de type SECAM, PAL ou NTSC par exemple, ou des signaux vidéo de luminance et de chrominance dans le cas d'un système à multiplexage temporel des composantes analogiques de type MAC par exemple, en vue de réaliser un chiffrage de ces signaux vidéo par permutation circulaire des segments situés de part et d'autre de chaque point de coupure, caractérisé en ce qu'il comprend trois registres à décalage à rebouclage, en ce que les polynômes générateurs de chacun de ces registres sont irréductibles et primitifs pour que les séquences de bits a, b, c qu'ils délivrent soient de longueurs maximales, en ce que les nombres de cellules $n\pm$, $n_b$, $n_c$ desdits registres sont différents, en ce que les trois registres comportent plusieurs sorties $a_i$ $b_j$ et $c_k$, et en ce que les adresses des points de coupure sont constituées par des sommes de N termes de poids $2^0$ à $2^{N-1}$ et de coefficients respectifs $S_0$ à $S_{N-1}$ dont au moins les quatre coefficients de poids le plus fort sont déduits d'équations logiques comportant au moins une addition modulo 2 de trois sorties $a_i$ $b_j$ et $c_k$, notée $(a_i \oplus b_j \oplus c_k)$, les rangs i j et k étant choisis différents autant que les degrés $n_a$, $n_b$, $n_c$ des registres le permettent, et les autres coefficients étant indifféremment soit fixes et égaux alors à 0 ou à 1 soit déduits pour l'un ou plusieurs d'entre eux de sorties $a_i$ $b_j$ et $c_k$ à l'aide d'équations ne comportant pas d'addition modulo 2 de trois sorties.

La structure ainsi définie est avantageuse pour la raison suivante. On a vu que, dans le cas du générateur de Geffe, la probabilité d'identité d'adresse, pour un bit d'adresse, est de $\frac{3}{4}$ lorsque les bits b et

4

# 0 115 097

les bits c sont connus, en raison du fait que, lorsque les valeurs des bits b et c sont égales, la sortie S est égale à cette valeur commune (voir l'équation (2)), la valeur du bit a n'intervenant donc pas. Le choix d'une équation logique dans laquelle le changement d'un seul bit sur les trois change la sortie, quelles que soient les valeurs des deux bits non touchés, remédie à cet inconvénient, puisqu'avec cette équation, pour 1 bit d'adresse, la probabilité d'identité d'adresse est égale à $\frac{1}{2}$. Lorsque le bornage des adresses, examiné plus loin, n'a pas d'effet sur l'efficacité de chaque bit d'adresse et lorsque la longueur de chaque registre est au moins égale à 4, la probabilité d'identité d'adresse, pour 4 bits d'adresse, est égale à $(\frac{1}{2})^4 = 6,25\%$, c'est-à-dire située au-dessous de la limite de distinction d'une structure dans une image. Le générateur proposé est donc très bien protégé vis-à-vis des tentatives de décryptage par essais successifs des différentes clés.

Par ailleurs, une autre combinaison non linéaire de trois registres A, B et C a été proposée par Jan-Olaf Brüer dans un rapport du l'Université de Linköping (Suède), n° LiTH-ISY-I-0572, en date du 31 mars 1983, intitulé "On nonlinear combinations of linear shift register sequences". Cette combinaison, représentée sur la figure 3, consiste à effectuer l'addition modulo 2 ou l'addition logique (elles conduisent au même résultat ici) de trois produits:

$$S = ab \oplus bc \oplus ca = ab + bc + ca \tag{3}$$

Ce générateur de Brüer présente, comme le générateur de Geffe, une distribution moyenne égale de 0 et de 1, mais sa complexité linéaire équivalente est encore plus élevée puisqu'elle est égale à $(n_a n_b + n_a n_c + n_b n_c)$. Il présente cependant le même défaut que le générateur de Geffe, en ce sens qu'il permet le décryptage par approximations successives. Ceci provient du fait que, dès que 2 sorties de 2 générateurs (A et B, ou B et C, ou C et A) sont identiques, le résultat ne dépend plus de la sortie du 3ème générateur, comme cela se produisait dans le générateur de Geffe lorsque les sorties des générateurs B et C étaient identiques. En conséquence, la probabilité de décodage, c'est-à-dire la probabilité d'identité de deux sorties indépendantes, est de 3/4 par bit d'adresse, alors qu'elle n'est que de 1/2 lorsqu'on ne met en oeuvre qu'une addition modulo 2 ($a \oplus b \oplus c$), par exemple. -

Dans la demande de brevet FR—A—2538192 précitée, on a décrit une solution qui permet d'obtenir, à partir de trois registres A, B et C, une complexité linéaire équivalente voisine de celle du générateur de Geffe sans présenter le même défaut. Cette solution est caractérisée en ce que les trois registres comportent plusieurs sorties $a_i$, $b_j$ et $c_k$, et en ce que les adresses des points de coupure sont constituées par des sommes de N termes de poids $2^0$ à $2^{N-1}$ et de coefficients respectifs $S_0$ à $S_{N-1}$ dont au moins les quatre coefficients de poids le plus fort sont déduits d'équations logiques comportant au moins une addition modulo 2 de trois sorties $a_i$, $b_j$ et $c_k$, notée $(a_i \oplus b_j \oplus c_k)$, les rangs i, j et k étant choisis différents autant que les degrés $n_a$, $n_b$, $n_c$ des registres le permettent, et les autres coefficients étant indifféremment soit fixes et égaux alors à 0 ou à 1, soit déduits pour l'un ou plusieurs d'entre eux de sorties $a_i$, $b_j$ et $c_k$ à l'aide d'équations ne comportant pas d'addition modulo 2 de trois sorties.

L'inconvénient de cette solution vient du fait que, lorsque le nombre de bits de la clé n'est pas très élevé, quand il est inférieur ou égal à 20 par exemple, les mêmes sorties des registres doivent être utilisées pour plusieurs bits d'adresses, ce qui diminue l'efficacité du chiffrement en augmentant la probabilité de décodage.

Un deuxième objet de l'invention est de remédier à cet inconvénient en calculant les M bits d'adresse de poids le plus fort successivement à partir des valeurs des sorties $a_i$, $b_j$, $c_k$ fournies à M instants différents de l'horloge de commande des registres.

L'invention concerne à cet effet un générateur de séquences numériques pseudoaléatoires, destiné notamment à fournir des adresses de points de coupure d'un signal vidéo composite, dans le cas d'un système à multiplexage en fréquences de type SECAM, PAL ou NTSC par exemple, ou des adresses de points de coupure des signaux vidéo de luminance et de chrominance dans le cas d'un système à multiplexage temporel de composantes analogiques de type MAC par exemple, en vue de réaliser un chiffrement de ces signaux vidéo par changement de l'ordre des points des deux segments situés de part et d'autre de chaque point de coupure, ce générateur comprenant trois registres à décalage à rebouclage A, B et C dont les nombres de cellules $n_a$, $n_b$ et $n_c$ sont différents et dont les polynômes générateurs sont irréductibles et primitifs pour que les séquences de bits a, b, c qu'ils délivrent soient de longueurs maximales, les adresses des points de coupure étant déduites des somme de N termes de poids $2^{N-1}$ à $2^0$ et de coefficients respectifs $S_0$ à $S_{N-1}$, caractérisé en ce que les M coefficients $S_0$ à $S_{M-1}$ de poids le plus fort sont fournis successivement par la sortie du générateur, qui fonctionne à une fréquence horloge égale ou supérieure à M fois la fréquence ligne du signal vidéo, et en ce que cette sortie est le résultat d'une équation logique comportant au moins deux additions modulo 2 de 3 sorties $a_i$, $b_j$, $c_k$ des trois registres.

La structure de générateur ainsi proposée conduit effectivement à une protection accrue vis-à-vis des tentatives de décryptage par essais successifs de différentes clés. Bien entendu, les longueurs $(2^{n_a}-1)$, $(2^{n_b}-1)$, $(2^{n_c}-1)$ des séquences délivrées par les trois registres, qui sont maximales, peuvent, là aussi, être choisies premières entre elles afin que la longueur des séquences pseudoaléatoires formées par les combinaisons de bits a, b, c soit elle-même maximale.

Les particularités et avantages de l'invention apparaîtront maintenant de manière plus précise dans la description qui suit et dans les dessins annexés, dans lesquels:

5

**0 115 097**

— la figure 1 représente un générateur de séquences numériques pseudoaléatoires de type classique à n cellules;
— la figure 2 représente un générateur de Geffe à trois registres;
— la figure 3 représente un générateur de Brüer à trois registres;
— les figures 4, 5, 6 sont des schémas de circuits utilisés dans le cas de bornage des adresses;
— la figure 7 représente un exemple de réalisation d'un générateur de séquences numériques pseudoaléatoires selon l'invention.

Les tableaux joints à la description sont, pour le tableau 1, un rappel des tables de vérité des opérations logiques d'addition, de produit et d'addition modulo 2 et, pour les tableaux 2 et 3, des tableaux indicateurs des probabilités de décodage des premier, deuxième, troisième et quatrième modes de réalisation de l'invention, en fonction du nombre de bits d'adresse utilisés, dans le cas où les degrés $n_a$, $n_b$, $n_c$ des registres sont tels que $n_a$=au moins 7, $n_b$=5, $n_c$=4, respectivement lorsqu'il n'y a pas et lorsqu'il y a perte d'efficacité due au bornage des adresses.

Dans un premier mode de réalisation de l'invention, le générateur est donc un générateur de Geffe à trois registres à décalage A, B, C à rebouclage, dont les polynômes générateurs sont irréductibles et primitifs, de sorte que les séquences de bits a, b, c qu'ils délivrent sont de longueurs maximales, c'est-à-dire égales respectivement à $2^{n_a}-1$, à $2^{n_b}-1$ et à $2^{n_c}-1$, $n_a$, $n_b$ et $n_c$ étant donc les nombres de cellules respectifs, ou degrés, des registres A, B et C, et étant conventionnellement choisis de telle manière que $n_a$ soit supérieur à $n_b$, lui-même supérieur à $n_c$. Les longueurs des trois registres, qui sont maximales, sont ici choisies premières entre elles, afin que la longueur des séquences pseudoaléatoires formées par les combinaisons de bits a, b, c soit elle-même maximale, et égale au produit $(2^{n_a}-1) \cdot (2^{n_b}-1) \cdot (2^{n_c}-1)$.

Une adresse quelconque S de point de coupure étant exprimée par une somme S de N termes de poids $2^0$ à $2^{N-1}$ affectées de coefficients respectifs $S_0$ à $S_{N-1}$, qui s'écrit:

$$S = \sum_{h=0}^{h=N-1} S_h 2^h \tag{4}$$

un objet de l'invention est atteint si au moins les quatre coefficients de poids le plus fort, $S_{N-1}$, $S_{N-2}$, $S_{N-3}$ et $S_{N-4}$, sont déduits d'équations logiques consistant chacune en une addition modulo 2 du type $S_h=a_i \oplus b_j \oplus c_k$, où $S_h$ est le terme générique de la somme S définissant l'adresse et $a_i$, $b_j$, $c_k$ des sorties des trois registres A, B et C. De préférence, les rangs i, j, k sont choisis différents, autant que les dégrés $n_a$, $n_b$, $n_c$ le permettent. Les derniers coefficients de l'adresse sont indifféremment soit fixes, et choisis égaux à 0 ou à 1, soit déduits pour un ou plusieurs d'entre eux de sorties $a_i$ $b_j$ et $c_k$ à l'aide d'équations ne comportant pas d'addition modulo 2 de trois sorties. La probabilité d'identité d'adresse est maintenant, pour quatre bits d'adresse, égale à $(1/2)^4$=6,25%, valeur qui est bien inférieure à celle de 10% reconnue plus haut comme valeur-limite de reconnaissance d'une structure dans une image.

L'addition modulo 2:

$$S_h = a_i \oplus b_j \oplus c_k \tag{5}$$

peut aussi s'écrire, en explicitant les opérations logiques:

$$S_h = \overline{a_i}(\overline{b_j}c_k + b_j\overline{c_k}) + a_i(b_j c_k + \overline{b_j}\overline{c_k}) \tag{5 bis}$$

Ces équations (5) ou (5 bis) représentent un système linéaire, et une tentative de décryptage ne nécessite que la résolution d'un nombre d'équations linéaires égal au nombre de bits $n_d$ de la clé ($n_d$ étant égal à $n_a+n_b+n_c$). Pour rendre cette résolution mathématique plus difficile, il est possible, dans un deuxième mode de réalisation de l'invention, d'utiliser, pour le premier bit d'adresse de poids le plus fort, une équation logique contenant par exemple deux additions modulo 2 différentes, de type $(a \oplus b \oplus c)$, dont le choix est dicté par la valeur d'un autre bit a ou b ou c. Quand on choisit $n_a$ supérieur à $n_b$, lui-même supérieur à $n_c$, ce bit multiplicateur est issu du registre le plus long A. Pour éviter d'employer plus de deux sorties des registres par bit d'adresse, on peut utiliser la même sortie a dans les deux sommes.

Dans ce deuxième mode de réalisation, l'équation logique du premier coefficient de poids le plus fort s'écrit alors:

$$S_{N-1} = \overline{a_i}(a_{i'} \oplus b_j \oplus c_k) + a_i(a_{i'} \oplus b_{j'} \oplus c_{k'}) \tag{6}$$

ou

$$S_{N-1} = \overline{a_i}(a_{i'} \oplus b_j \oplus c_k) + a_i(\overline{a_{i'}} \oplus b_{j'} \oplus c_{k'}) \tag{6 bis}$$

Ces deux expressions (6) et (6 bis), dans lesquelles on a utilisé la même sortie $a_{i'}$ dans les deux sommes pour éviter d'employer trois sorties a pour un seul bit d'adresse, ne diffèrent que par le fait que l'on utilise soit $a_{i'}$ soit son complément $\overline{a_{i'}}$ dans la deuxième somme. Si la complexité du circuit n'est pas augmentée

6

de façon significative, il est préférable d'utiliser l'expression (6 bis) car le fait d'employer $\overline{a}_{i'}$ diminue la similitude entre les deux sommes.

Les équations logiques donnant au moins trois des coefficients de poids le plus fort suivants restent, elles, de la forme:

$$S_h = a_{i''} \oplus b_{j''} \oplus c_{k''} \qquad (7)$$

les rangs i'' j'' k'' étant là encore choisis différents, autant que les degrés $n_a$, $n_b$ et $n_c$ le permettent. Les derniers coefficients de l'adresse sont fixes et choisis égaux à 0 ou à 1 indifféremment.

Dans un troisième mode de réalisation de l'invention, l'équation logique du deuxième coefficient de poids le plus fort $S_{N-2}$ est elle aussi du type de l'équation (6) ou (6 bis), avec des coefficients i j k choisis différents, et les équations logiques donnant au moins deux des coefficients de poids le plus fort suivants sont du type de l'équation (7). Les autres coefficients sont fixes et égaux à 0 ou 1. Ce troisième mode de réalisation offre une protection plus grande vis-à-vis du décryptage mathématique, puisque les deux coefficients de poids le plus fort contiennent des produits et que leur ordre de complexité est donc voisin de $n_a(n_b+n_c)=63$, par exemple, lorsque $n_a$, $n_b$ et $n_c$ valent respectivement 7, 5 et 4.

Cependant, les deux coefficients de poids le plus fort $S_{N-1}$ et $S_{N-2}$ utilisent chacun deux sorties du registre A, deux sorties du registre B et deux sorties du registre C. Si la longueur du registre le plus court C n'est par exemple que de 4, on retrouvera donc, dans les coefficients d'adresse suivants, des sorties de C déjà utilisées, ce qui augmentera la probabilité d'identité d'adresse et, par suite, le risque de décryptage par essais successifs de clés.

Pour remédier à cet inconvénient, on peut, dans un quatrième mode de réalisation de l'invention, choisir, comme termes multiplicatifs, des sorties des registres de plus faible longueur en prenant par exemple une sortie du registre B pour le premier coefficient et une sortie du registre C pour le deuxième. Les équations logiques des deux coefficients de poids le plus fort s'écrivent alors:

$$S_{N-1} = \overline{b}_j(a_i \oplus b_{j'} \oplus c_k) + b_j(a_{i'} \oplus b_{j'} \oplus c_{k'}) \qquad (8)$$

ou

$$S_{N-1} = \overline{b}_j(a_i \oplus b_{j'} \oplus c_k) + b_j(a_{i'} \oplus \overline{b}_{j'} \oplus c_{k'}) \qquad (8\text{ bis})$$

et

$$S_{N-2} = \overline{c}_{k''}(a_{i''} \oplus b_{j''} \oplus c_{k'''}) + c_{k''}(a_{i'''} \oplus b_{j'''} \oplus c_{k'''}) \qquad (9)$$

ou

$$S_N - 2 = \overline{c}_{k''}(a_{i''} \oplus b_{j''} \oplus c_{k'''}) + c_{k''}(a_{i'''} \oplus b_{j'''} \oplus \overline{c}_{k'''}) \qquad (9\text{ bis})$$

Dans ce cas, comme précédemment, les équations logiques donnant au moins deux des coefficients de poids le plus fort suivants sont du type:

$$S_h = a_{i''''} \oplus b_{j''''} \oplus c_{k''''} \qquad (10)$$

en choisissant des rangs i j k différents autant que les degrés des registres le permettent, et les derniers coefficients sont fixes et égaux à 0 ou à 1.

Avec ce quatrième mode de réalisation, les ordres de complexité des deux premiers coefficients sont respectivement voisins de $n_b(n_a+n_c)$ et $n_c(n_a+n_b)$, soit respectivement 55 et 48 dans l'exemple choisi précédemment ($n_a=7$, $n_b=5$, $n_c=4$). Ces ordres de complexité sont donc légèrement inférieurs à ceux du deuxième mode de réalisation. Ce système est cependant mieux protégé contre le décryptage par essais successifs de clés, car on peut remarquer que le coefficient $S_{N-1}$ dépend toujours de $b_{j'}$ et que le coefficient $S_{N-2}$ dépend toujours de $C_{k''}$ ce qui permet de réutiliser les sorties $b_j$ et $c_{k''}$ pour le troisième ou le quatrième coefficient $S_{N-3}$ ou $S_{N-4}$ sans diminution de leur efficacité.

Dans les quatre modes de réalisation qui viennent d'être proposés, la protection est maximale par rapport à un décryptage par étapes successives qui commencerait par les bits des registres B et C les plus courts. Cependant, la protection par rapport à un décryptage commençant par les bits des registres A et B ou des registres A et C doit être également recherchée. En effet, dans le cas où les degrés des registres sont par exemple égaux à 5, 4 et 3, un décryptage à partir des bits de A et C ne demanderait, en moyenne, que $\frac{1}{2}(2^{5+3}+2^4)=(128+8)$ essais, soit environ 2 minutes, alors que si ce décryptage à partir de A et C n'était pas possible, il faudrait en moyenne 2 048 essais, soit 34 minutes; dans le cas où les degrés des registres sont égaux à 7, 5, 4, il faudrait en moyenne 17 minutes au lieu de 9 heures. A titre d'exemple, le tableau 2 de la page 17 indique les probabilités de décodage des quatre modes de réalisation proposés, en fonction du nombre de bits d'adresse utilisés, dans le cas où les degrés $n_a$, $n_b$, $n_c$ sont tels que $n_a=$au moins 7, $n_b=5$ et $n_c=4$, et lorsqu'il n'y a pas, bien entendu, de perte

## TABLEAU 1

| a+b (a→) | 0 | 1 |   | a·b=ab (a→) | 0 | 1 |   | a⊕b (a→) | 0 | 1 |
|---|---|---|---|---|---|---|---|---|---|---|
| b=0 | 0 | 1 |   | b=0 | 0 | 0 |   | b=0 | 0 | 1 |
| b=1 | 1 | 1 |   | b=1 | 0 | 1 |   | b=1 | 1 | 0 |

## TABLEAU 2

| | | | Nombre bits d'adresse | |
|---|---|---|---|---|
| | | | 3 | 4 |
| Probabilité de décodage | Solutions 1, 2, 4 | | 12,5% | 6,25% |
| pour mêmes b et c | Solution 3 | | " | " |
| Probabilité de décodage pour mêmes a et b ou mêmes a et c | Solution 1 | | 12,5 | 6,25 |
| | " 2 | | 12,5 | 9,4 |
| | " 3 | | 18,7 | 12,5 |
| | " 4 | | 12,5 | 9,4 |

| | | | Nombre bits d'adresse | |
|---|---|---|---|---|
| | | | 5 | 6 |
| Probabilité de décodage | Solutions 1, 2, 4 | | 3,1% | 1,6% |
| pour mêmes b et c | Solution 3 | | " | 3,1 ou 1,6* |
| Probabilité de décodage pour mêmes a et b ou mêmes a et c | Solution 1 | | 6,25 | 6,25 |
| | " 2 | | 6,25 | 6,25 |
| | " 3 | | 9,4 | 6,25 |
| | " 4 | | 6,25 | 6,25 |

\* lorsqu'on utilise 8 sorties du registre $A(n_a>7)$

d'efficacité due au bornage des adresses (qui va être décrit maintenant).

Le générateur précédemment décrit à travers quatre modes de réalisation possibles est capable de fournir $2^N$ adresses différentes de valeur 0 à $2^N-1$ (on a vu en effet qu'une adresse quelconque de point de coupure était exprimée par une somme S de N termes $S_h 2^h$ de poids $2^0$ à $2^{N-1}$ affectés de coefficients respectifs $S_0$ à $S_{N-1}$). Quand le nombre M d'échantillons mis en mémoire par ligne est légèrement supérieur à une puissance de 2, il ne se pose pas de problème de dépassement des bornes si l'on choisit N égal à la puissance de 2 juste inférieure à M. Il peut arriver cependant que ce soit le nombre M qui soit de très peu inférieur à une puissance entière de 2: dans ce cas, le choix précédent de N conduirait à des permutations correspondant à des translations de lignes maximales voisines de la demi-largeur d'image, ce qui ferait perdre en efficacité de brouillage. Cette éventualité se produit en particulier dans le cas du brouillage d'un signal au standard européen codé PAL, lorsqu'on choisit une fréquence d'échantillonnage égale à quatre fois la fréquence sous-porteuse couleur (soit 17,734 mégahertz pour cette fréquence d'échantillonnage) pour éviter des interférences entre ces deux fréquences.

Dans ce cas, le nombre de points mis en mémoire par ligne ne dépasse pas en pratique 990, en tenant compte de la partie de signal sacrifiée pour permettre la répétition d'une zone au voisinage du point de coupure (caractéristique de redondance, connue d'après les deux demandes de brevet déjà citées). Pour obtenir des translations pouvant avoisiner la largeur de l'image sans la dépasser, on peut alors choisir par exemple N=10, soit 1 024 adresses possibles, et faire subir à $2^p$ de ces adresses, comprises entre $2^N-2^p$ et $2^N-1$, une diminution d'une quantité $2^q$, p étant choisi de telle sorte que $2^N-2^p$ soit inférieur à M, et q étant

8

choisi égal ou supérieur à p mais tel que $2^q$ soit inférieur à $2^N-2^p$. Dans l'exemple cité, on peut choisir, par exemple, p et q égaux tous deux à 6, ce qui revient à diminuer de 64 les 64 adresses supérieures ou égales à 960. Cette opération revient à forcer le coefficient $S_6$ à la valeur 0 lorsque les coefficients $S_7$, $S_8$ et $S_9$ sont tous les trois égaux à 1, ce qui peut être obtenu très simplement par le circuit indiqué sur la figure 4 qui utilise une porte ET à deux entrées et une porte non-ET à trois entrées vérifiant l'équation:

$$S*_6 = S_6 \cdot \overline{S_7 \cdot S_8 \cdot S_9} \tag{11}$$

On doit remarquer que cette opération diminue l'efficacité du coefficient $S_6$, qui n'a plus d'influence sur l'adresse fournie que pendant les 7/8e du temps.

Par ailleurs, les signaux de télévision mis en mémoire comportent toujours une période initiale de référence contenant soit le niveau du noir lorsqu'il s'agit d'un signal en noir et blanc ou d'un signal de luminance, soit une salve de référence superposée au niveau du noir lorsqu'il s'agit d'un signal en couleur composite de type PAL, SECAM ou NTSC, soit un niveau de référence correspondant au niveau 0 de différence de couleur lorsqu'il s'agit d'un signal de différence de couleur U ou V (cas du codage MAC par exemple). Comme ce niveau de référence pourrait être repéré relativement facilement dans le signal chiffré, il est important, pour éviter un décryptage de l'image, de ne pas appliquer la permutation à cette période, ce qui revient à interdire les adresses de coupure qui tombent dans ces périodes de référence.

Un moyen simple de réaliser cette interdiction consiste à faire subir aux $2^r$ adresses fournies par le générateur, comprises entre 0 et $2^r-1$, une augmentation d'une quantité $2^s$, r étant choisi de telle sorte que $2^r$ soit supérieur à la longueur L du segment de référence, et s étant choisi égal ou supérieur à r mais tel que $2^s$ soit inférieur à $M-2^r$. Dans l'exemple cité, la longueur L ne dépasse pas 100 éléments échantillonnés. On peut donc choisir, par exemple, r et s égaux tous deux à 7, ce qui revient à ajouter 128 aux 128 premières adresses, comprises entre 0 et 127. Cette opération revient à forcer le coefficient $S_7$ à la valeur 1 lorsque les coefficients $S_8$ et $S_9$ sont tous les deux égaux à 0, ce qui peut être obtenu très simplement par le circuit indiqué sur la figure 5 qui utilise une porte OU et une porte non-OU à deux entrées, vérifiant l'équation:

$$S*_7 = S_7 + \overline{S_8+S_9} \tag{12}$$

On doit là encore remarquer que cette opération diminue l'efficacité du coefficient $S_7$, qui n'a plus d'influence sur l'adresse fournie que pendant les 3/4 du temps.

Dans le cas du premier mode de réalisation décrit (voir les équations (5) et (5 bis)), la probabilité d'identité d'adresse pour 4 bits significatifs d'adresse $S_6$ à $S_9$, devient donc égale, dans l'exemple cité et dans le cas où le plus petit registre comporte au moins 4 cellules, à:

$$\tfrac{1}{2} \times \tfrac{1}{2} \times [(\tfrac{3}{4} \times \tfrac{1}{2}) + (\tfrac{1}{4} \times 1)] \times [(\tfrac{7}{8} \times \tfrac{1}{2}) + (\tfrac{1}{8} \times 1)] = 8,8\% \tag{13}$$

A titre d'exemple, le tableau 3 de la page 21 indique en fonction du nombre de bits d'adresse les probabilités d'identité d'adresses calculées dans le cas des bornes inférieures et supérieures précédentes, pour les premier, deuxième, troisième et quatrième modes de réalisation proposés, dans le cas où les longueurs des registres sont respectivement 4 pour C, 5 pour B et supérieure ou égale à 7 pour A.

On peut constater que la probabilité de décodage est égale à la probabilité minimale lorsque l'on connaît les bits de B et C à la fois (9 bits). Par contre, lorsque l'on connaît les bits de A et B à la fois (au moins 12 bits) ou A et C à la fois (au moins 11 bits), la probabilité de décodage est supérieure à la probabilité minimale, et ne descend au-dessous du seuil de perception de 10% que lorsqu'on utilise au moins quatre bits d'adresse dans la solution 1, cinq bits dans les solutions 2 et 4, et six bits dans la solution 3. On peut remarquer en outre que l'exemple des bornes citées s'applique aussi bien aux systèmes PAL et SECAM en Europe, en choisissant la fréquence d'horloge $f_H$ voisine de 17,734 MHz, qu'au système NTSC dans les pays à standard 525 lignes, 30 images/seconde, lorsqu'on choisit une fréquence d'horloge proche de cinq fois la fréquence sous-porteuse couleur NTSC, soit 17,9 MHz.

Dans le cas d'un système à multiplexage temporel de composantes analogiques, le générateur doit fournir autant d'adresses de points de coupure qu'il y a de composantes dans chaque ligne,

TABLEAU 3

| | | Nombre bits d'adresse | |
| --- | --- | --- | --- |
| | | 3 | 4 |
| Probabilité de décodage pour mêmes b et c | Solutions 1, 2, 4 | 15,6% | 8,8% |
| | Solution 3 | 15,6 | 8,8 |
| Probabilité de décodage pour mêmes a et b ou mêmes a et c | Solution 1 | 15,6 | 8,8 |
| | " 2 | 15,6 | 12,2 |
| | " 3 | 20,3 | 14,8 |
| | " 4 | 15,6 | 12,2 |

| | | Nombre bits d'adresse | |
| --- | --- | --- | --- |
| | | 3 | 4 |
| Probabilité de décodage pour mêmes b et c | Solutions 1, 2, 4 | 4,4% | 2,2% |
| | Solution 3 | 4,4 | 3,5 ou 2,2* |
| Probabilité de décodage pour mêmes a et b ou mêmes a et c | Solution 1 | 7,8—7 (a et b) (a et c) | 6,25 |
| | " 2 | 8,3 | 8,3 |
| | " 3 | 11 | 7,4 |
| | " 4 | 8,3 | 8,3 |

* lorsqu'on utilise 8 sorties du registre $A(n_a>7)$

c'est-à-dire par exemple deux dans le cas du système MAC (où les composantes sont Y et, alternativement, U et V). Comme les composantes de luminance et de chrominance comportent des informations de formes voisines, on ne perd pas en degré de secret en appliquant des permutations circulaires analogues à ces composantes, c'est-à-dire en calculant les deux adresses à partir des mêmes sorties des mêmes registres à décalage et en utilisant les mêmes équations logiques. Ceci permet d'avoir un générateur d'adresses dont la complexité n'est pratiquement pas plus grande que dans le cas précédent, seul le problème des bornes pouvant différer suivant les composantes.

Si l'on suppose par exemple que le générateur fournit 6 coefficients variables $A_0$ à $A_5$ déduits des opérations ci-dessus en prenant N=6 et, également, que l'on soit dans le cas d'un signal MAC tel que la durée de la composante de luminance soit environ le double de celle de la composante de chrominance, avec une fréquence d'horloge telle que la capacité utile des mémoires luminance et chrominance soit légèrement inférieure à 512 et 256 respectivement, on peut prendre alors pour la luminance $N_Y=9$ et pour la chrominance $N_C=8$, en choisissant pour coefficients de l'expression d'adresse (formée, on l'a déjà rappelé, d'une somme de N termes $S_h 2^h$):

—pour la luminance:

$$S_{Y_h} = A_{(h-3)} \quad \text{pour } h \geqslant 3$$

$$\text{et} = 0 \quad \text{pour } 0 \leqslant h \leqslant 2$$

—pour la chrominance:

$$S_{C_h} = A_{(h-2)} \quad \text{pour } h \geqslant 2$$

$$\text{et} = 0 \quad \text{pour } 0 \leqslant h \leqslant 1$$

après avoir fait subir à $A_2$ et $A_3$ les mêmes opérations que celles décrites précédemment pour $S_6$ et $S_7$ (figures 4 et 5) pour interdire les segments d'adresse situés aux extrémités.

0 115 097

On peut se trouver également dans le cas d'un signal MAC avec une fréquence d'horloge telle que la capacité utile de mémoire luminance soit plus près de 768 que de $512(=2^9)$ ou de $1024(=2^{10})$. Une première solution consiste alors à choisir $N_Y=10$ et à forcer à 0 le coefficient $S_{Y_8}$ ainsi éventuellement qu'un coefficient de poids plus faible ($S_{Y_6}$ ou $S_{Y_5}$) lorsque le coefficient de poids le plus fort $S_{Y_9}$ est égal à 1, mais cette solution présente l'inconvénient de réduire à un facteur 1/2 l'efficacité du deuxième coefficient de poids le plus fort $S_{Y_8}$ et de réduire également l'efficacité de deux autres coefficients en tenant compte de la borne inférieure. Une deuxième solution consiste à choisir $N_Y=9$, ce qui donne 512 adresses possibles, et à choisir, pour la translation des adresses comprises entre 0 et $2^r-1$, une quantité $2^s=2^9=512$, ce qui est possible lorsque, par exemple, la longueur du niveau de référence est inférieure à 128 et que la longueur M du signal est comprise entre 640 et 896.

Les coefficients des adresses luminance sont alors choisis comme suit:

$$S_{Y_h} = A_{(h-3)} \qquad \text{pour } 3 \leqslant h \leqslant 8$$

$$= 0 \qquad \text{pour } 0 \leqslant h \leqslant 2$$

et

$$S_{Y_9} = 1 \text{ lorsque } S_{Y_8}=S_{Y_7}=0$$

$$et^9 = 0 \text{ dans tous les autres cas.}$$

Cela revient à choisir

$$S_{Y_9}=\overline{S_{Y_8}+S_{Y_7}} \qquad (14)$$

ce qui peut être obtenu très simplement avec une porte non-OU à deux entrées comme indiqué sur la figure 6. Cette deuxième solution présente l'avantage que l'efficacité des 6 coefficients $A_0$ à $A_5$ reste entière. Les probabilités de décodage sont alors celles indiquées dans le tableau 2 de la page 17. Ce dernier type de solution peut également s'appliquer au cas d'un signal MAC avec une fréquence d'horloge telle que la capacité utile de la mémoire chrominance soit plus près de 384 que de $256(=2^8)$ ou de $512(=2^9)$. Les coefficients des adresses chrominance seraient alors choisis comme suit:

$$Sc_h = A_{(h-2)} \qquad \text{pour } 2 \leqslant h \leqslant 7$$

$$= 0 \qquad \text{pour } 0 \leqslant h \leqslant 1$$

et

$$Sc_8=Sc_7+Sc_6 \qquad (15)$$

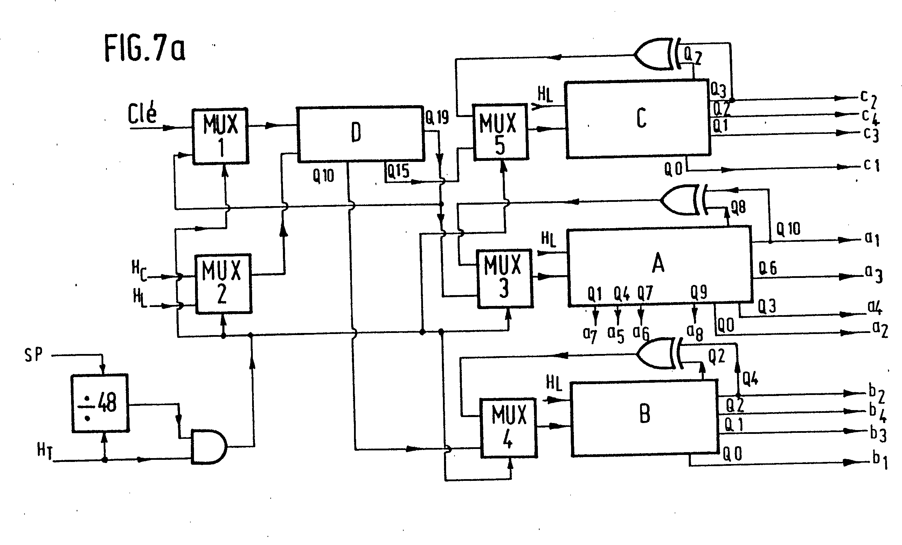

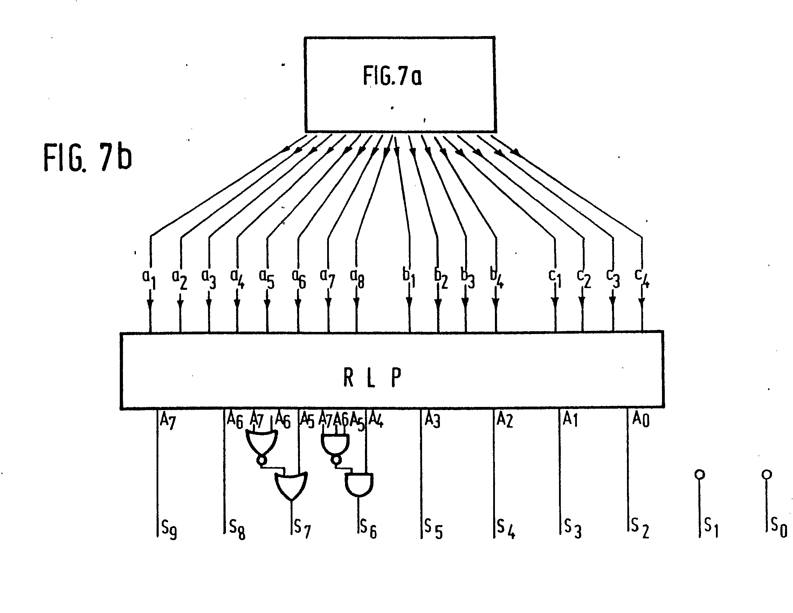

La figure 7 constituée par l'association des parties de figure 7a et 7b montre un exemple de réalisation pratique d'un générateur d'adresses numériques pseudo-aléatoires adapté aux signaux PAL, SECAM et NTSC. Les longueurs des trois registres A, B, C ont été choisies respectivement égales à 11, 5 et 4, ce qui permet environ 950 000 clés différentes de 20 bits. Les polynômes générateurs irréductibles et primitifs, choisis pour ne nécessiter qu'une prise intermédiaire sur chaque registre, sont les suivants:

$$x^{11}+x^2+1=0$$

$$x^5+x^2+1=0$$

$$x^4+x+1=0$$

On utilise 8 sorties $a_1$ à $a_8$ de A, 4 sorties $b_1$ à $b_4$ de B et 4 sorties $c_1$ à $c_4$ de C, qui sont appliquées respectivement aux 16 entrées d'un réseau logique programmable RLP par exemple de type 82 S 100 fabriqué par la société Signetics. Ce réseau RLP fournit 8 sorties $A_0$ à $A_7$ utilisées pour fournir 8 bits d'adresse variable $S_2$ à $S_9$, les deux bits d'adresse de poids le plus faible $S_0$ et $S_1$ étant égaux à 0. Comme on l'a vu précédemment, pour interdire les adresses comprises entre 0 et 127 et celles comprises entre 960 et 1 023, les coefficients $S_6$ et $S_7$ sont déduits des sorties $A_5$, $A_6$, $A_7$ selon des schémas programmé de façon qu'il fournisse, conformément par exemple au quatrième mode de réalisation de l'invention, une sortie $A_7$ selon l'équation (8 bis), une sortie $A_6$ selon l'équation (9 bis), et six sorties $A_0$ à $A_5$ selon l'équation (10). On choisi, à titre d'exemple, les équations suivantes:

11

$$A_7 = \overline{b_1}(a_3 \oplus b_4 \oplus c_1) + b_1(a_7 \oplus \overline{b_4} \oplus c_4)$$

$$A_6 = \overline{c_3}(a_4 \oplus b_3 \oplus c_2) + c_3(a_8 \oplus b_2 \oplus \overline{c_2})$$

$$A_5 = a_1 \oplus b_1 \oplus c_3$$

$$A_4 = a_5 \oplus b_3 \oplus c_1$$

$$A_3 = a_6 \oplus b_2 \oplus c_4$$

$$A_2 = a_2 \oplus b_4 \oplus c_2$$

$$A_1 = a_3 \oplus b_1 \oplus c_3$$

$$A_0 = a_8 \oplus b_3 \oplus c_1$$

Les deux premières nécessitent 8 produits, les suivantes 4. On utilise donc ainsi 40 produits parmi les 48 disponibles sur le réseau 82 S 100. Comme on l'a vu, les deux bits d'adresse $S_2$ et $S_3$, déduits de $A_0$ et $A_1$, correspondent à des translations trop faibles pour apporter une contribution significative au brouillage tel qu'il est perçu par l'oeil. Leur utilisation renforce cependant le chiffrage vis-à-vis d'un essai de décryptage mathématique; ils rendent en effet plus difficile l'identification des sauts d'adresses introduits par les coefficients $S_4$ à $S_9$ puisqu'ils introduisent trois adresses supplémentaires possibles entre chacune des adresses fournies par $S_4$ à $S_9$.

Dans le générateur de la figure 7, on charge à intervalles réguliers les registres A, B et C par leurs mots de départ respectifs, de longueurs $n_a$, $n_b$ et $n_c$. Ces mots, mis bout à bout, constituent la clé de longueur $n_d = 20$ bits. Cette clé est soit fournie par une carte de décodage, soit transmise par l'émetteur sous forme chiffrée, puis déchiffrée par un circuit d'accès non représenté. Quand une nouvelle clé arrive, elle est transférée dans un registre à décalage D à 20 étages, en 20 coups d'une horloge $H_c$ d'accompagnement de la clé, par l'intermédiaire des multiplexeurs $MUX_1$ et $MUX_2$, en commençant, par exemple, par les bits destinés aux registres C, puis B, puis A. Au bout de 2 coups de l'horloge $H_c$, on trouve donc, dans le registre D, le mot de départ du registre A sur les sorties $Q_0$ à $Q_{10}$, le mot de départ du registre B sur les sorties $Q_{11}$ à $Q_{15}$ et le mot de départ du registre C sur les sorties $Q_{16}$ à $Q_{19}$.

A intervalles réguliers, égaux ici à 48 trames, on reboucle le registre D sur lui-même par l'intermédiaire du multiplexeur $MUX_1$. On connecte ses sorties $Q_{19}$, $Q_{10}$ et $Q_{15}$ aux entrées des registres A, B et C, par l'intermédiaire des multiplexeurs $MUX_3$, $MUX_4$, $MUX_5$, en ouvrant en même temps les boucles de ces registres, et on applique au registre D, par l'intermédiaire de $MUX_2$, pendant 20 coups d'horloge consécutifs, une même horloge $H_L$ à la fréquence de balayage ligne que celle qui est appliquée en permanence aux registres A, B et C. Au bout de 20 coups d'horloge $H_L$, les mots stockés dans les registres A, B et C correspondent alors ux bits stockés initialement dans le registre D entre les sorties $Q_0$ et $Q_{10}$ pour A, $Q_{11}$ et $Q_{15}$ pour B, $Q_{16}$ et $Q_{19}$ pour C respectivement. En outre, en raison du rebouclage de D sur lui-même pendant cette opération, ce registre se retrouve dans l'état initial au bout de 20 coups d'horloge et joue donc le rôle de mémoire pour la clé.

L'opération de chargement des registres A, B et C, à partir du registre D, est effectuée pendant une période de retour trame (repérée par l'horloge $H_T$ à la fréquence de balayage trame) toutes les 48 trames, c'est-à-dire environ toutes les secondes dans l'exemple cité, la synchronisation avec l'émetteur étant obtenue à l'aide d'une impulsion d'initialisation SP transmise par celui-ci soit dans la voie de diffusion des données, soit dans une ligne spéciale d'image. En dehors de ces périodes de chargement de A, B et C, le registre D est connecté au circuit de contrôle d'accès, par l'intermédiaire des multiplexeurs $MUX_1$ et $MUX_2$, et se trouve donc prêt à recevoir toute nouvelle clé de ce circuit. Bien entendu, pour une production en grande série, l'ensemble des circuits représentés sur la figure 7 peut être intégré sur une seule puce de silicium de quelques $mm^2$ de surface.

Comme on l'a déjà dit, les abscisses x des points de coupure sont déduites d'une somme S de N termes de poids $2^{N-1}$ à $2^0$ affectés de coefficients respectifs $S_0$ à $S_{N-1}$:

$$S = \sum_{h=0}^{h=N-1} S_h 2^{N-h-1}, \tag{16}$$

les M coefficients $S_0$ à $S_{M-1}$ de poids le plus fort étant calculés à partir des sorties des registres A, B et C, les autres coefficients étant choisis indifféremment nuls on égaux à 1. Dans le cas d'un signal PAL, SECAM ou NTSC échantillonné à une fréquence de l'ordre de 18 MHz, il est judicieux de choisir N=8 et de prendre pour adresse de coupure:

# 0 115 097

$$x = 4S \qquad \text{lorsque } 32 \leqslant S < 240$$

$$x = 4S + 128 \qquad \text{lorsque } S < 32$$

$$x = 4S - 64 \qquad \text{lorsque } S \geqslant 240$$

pour éviter que le point de coupure tombe dans le signal de référence qui précède le signal utile ou au-delà du dernier point utile de la ligne.

Dans le cas d'un signal MAC échantillonné à 13,5 MHz pour la luminance Y et à 6,75 MHz pour la chrominance $\hat{C}$, il est, de même, judicieux de choisir $N=8$ et de prendre respectivement pour adresses de coupures en luminance et en chrominance, soit:

$$x_y = 2S + 128$$

et

$$x_c = S + 64$$

soit:

$$x_y = 2S + 64$$

et

$$x_c = S + 32$$

Dans trois modes de réalisation de l'invention, dits cinquième, sixième et septième, chacun des M coefficients est calculé à partir de plusieurs sorties des registres A, B et C mesurées au même instant. La fréquence horloge F que l'on doit utiliser est alors égale au minimum à M fois la fréquence ligne $F_l$ du signal vidéo. Pour une période ligne

$$\frac{1}{Fl} = 64 \ \mu s,$$

en Europe, les coefficients peuvent être calculés, par exemple, à partir des valeurs des sorties aux instants:

$$t_0 + k \ 64 \ \mu s \qquad \text{pour } S_0$$

$$t_0 + \frac{1}{F} + k \ 64 \ \mu s \qquad \text{pour } S_1$$

$$t_0 + \frac{2}{F} + k \ 64 \ \mu s \qquad \text{pour } S_2, \dots \text{ etc.}$$

Dans le cinquième mode de réalisation proposé, les trois registres comportent chacun deux sorties notées $a_0$, $a_1$, $b_0$, $b_1$, $c_0$ et $c_1$ et l'équation logique est dérivée du générateur de Geffe, en introduisant des additions modulo 2, et est de la forme:

$$a_1(a_0 \oplus b_0 \oplus c_0) + \bar{a}_1(a_0 \oplus b_1 \oplus c_1) \qquad (17)$$

ou

$$a_1(a_0 \oplus b_0 \oplus c_0) + \bar{a}_1(\bar{a}_0 \oplus b_1 \oplus c_1) \qquad (18)$$

la deuxième expression présentant, sur la première, l'avantage que la deuxième somme modulo 2 est rendue encore plus différente de la première en utilisant le complément à 1 de $a_0$ au lieu de $a_0$ lui-même.

Dans le sixième mode de réalisation proposé, le registre A comporte 3 sorties notées $a_0$, $a_1$ et $a_2$, les registres B et C comportent chacun deux sorties notées $b_0$, $b_1$, $c_0$ et $c_1$ et l'équation logique, dérivée du générateur de Geffe, est de la forme:

$$a_2(a_0 \oplus b_0 \oplus c_0) + \bar{a}_2(a_1 \oplus b_1 \oplus c_1) \qquad (19)$$

expression dans laquelle les deux sommes modulo 2 n'ont pas d'élément commun.

Dans le septième mode de réalisation proposé, les trois registres comportent chacun trois sorties notées $a_0$, $a_1$, $a_2$, $b_0$, $b_1$, $b_2$, $c_0$, $c_1$ et $c_2$ et l'équation logique est dérivée du générateur de Brüer, en introduisant des additions modulo 2, et comprend l'addition logique des trois produits logiques effectués entre deux additions modulo 2 de sorties différentes:

$$(a_0 \oplus b_0 \oplus c_0)(a_1 \oplus b_1 \oplus c_1) + (a_1 \oplus b_1 \oplus c_1)(a_2 \oplus b_2 \oplus c_2) + (a_2 \oplus b_2 \oplus c_2)(a_0 \oplus b_0 \oplus c_0) \qquad (20)$$

13

Dans un huitième mode de réalisation, selon l'invention, les trois registres ne comportent qu'une sortie et l'équation logique, dérivée du générateur de Geffe, est fonction de trois sorties $a_0$, $b_0$, $c_0$ à l'instant $t_0$ et de trois sorties $a_1$, $b_1$, $c_1$ à l'instant $t_0+1/F$ ou $t_0-1/F$ et est de la forme:

$$a_1(a_0\oplus b_0\oplus c_0)+\overline{a_1}(a_0\oplus b_1\oplus c_1) \qquad (17)$$

ou

$$a_1(a_0\oplus b_0\oplus c_0)+\overline{a_1}(a_0\oplus b_1\oplus c_1) \qquad (18)$$

Dans un neuvième mode de réalisation, selon l'invention, le registre A comporte deux sorties, les registres B et C comportent chacun une sortie et l'équation logique, dérivée du générateur de Geffe, est fonction des valeurs $a_0$, $b_0$, $c_0$ de trois sorties à l'instant $t_0$, des valeurs $a_1$, $b_1$, $c_1$ de ces trois mêmes sorties à l'instant $t_0+1/F$ et de la valeur $a_2$ de la 2ème sortie du registre A à l'instant $t_0$ ou $t_0+1/F$, et est de la forme:

$$a_2(a_0\oplus b_0\oplus c_0)+\overline{a_2}(a_1\oplus b_1\oplus c_1) \qquad (19)$$

Dans les huitième et neuvième modes de réalisation, pour une période ligne

$$\frac{1}{F_l}=64\ \mu s,$$

les coefficients peuvent être calculés, par exemple, à partir des valeurs des sorties aux instants:

$$t_0+k\ 64\ \mu s \text{ et } \qquad t_0+\frac{1}{F}+k\ 64\ \mu s \qquad \text{pour } S_0$$

$$t_0+\frac{2}{F}+k\ 64\ \mu s \text{ et } \qquad t_0+\frac{3}{F}+k\ 64\ \mu s \qquad \text{pour } S_1$$

$$t_0+\frac{4}{F}+k\ 64\ \mu s \text{ et } \qquad t_0+\frac{5}{F}+k\ 64\ \mu s \qquad \text{pour } S_2,\dots \text{ etc.}$$

La fréquence horloge F que l'on doit utiliser dans ces huitième et neuvième modes de réalisation est donc égale au minimum à 2 M fois la fréquence $F_l$.

Dans un dixième mode de réalisation, selon l'invention, les trois registres ne comportent qu'une sortie et l'équation logique, dérivée du générateur de Geffe, est fonction de trois sorties $a_0$, $b_0$, $c_0$ à l'instant $t_0$, de trois sorties $a_1$, $b_1$, $c_1$ à l'instant

$$t_0+\frac{1}{F}$$

et d'une sortie $a_2$ à l'instant

$$t_0+\frac{2}{F}$$

ou

$$t_0-\frac{1}{F}$$

et est de la forme:

$$a_2(a_0\oplus b_0\oplus c_0)+\overline{a_2}(a_1\oplus b_1\oplus c_1) \qquad (19)$$

Dans un onzième et dernier mode de réalisation, selon l'invention, les trois registres ne comportent qu'une sortie et l'équation logique, dérivée du générateur de Brüer, est fonction de trois sorties $a_0$, $b_0$, $c_0$ à l'instant $t_0$, de trois sorties $a_1$, $b_1$, $c_1$ à l'instant

$$t_0 + \frac{1}{F}$$

et de trois sorties $a_2$, $b_2$, $c_2$ à l'instant

$$t_0 + \frac{2}{F}$$

et est de la forme:

$$(a_0 \oplus b_0 \oplus c_0)(a_1 \oplus b_1 \oplus c_1) + (a_1 \oplus b_1 \oplus c_1)(a_2 \oplus b_2 \oplus c_2) + (a_2 \oplus b_2 \oplus c_2)(a_0 \oplus b_0 \oplus c_0) \qquad (20)$$

Dans ces deux derniers modes de réalisation, pour une période ligne

$$\frac{1}{F_I} = 64 \ \mu s,$$

les coefficients peuvent être calculés, par exemple, à partir des valeurs des sorties aux instants:

$$t_0 + k \ 64 \ \mu s, \qquad t_0 + \frac{1}{F} + k \ 64 \ \mu s \ \text{et} \qquad t_0 + \frac{2}{F} + k \ 64 \ \mu s \qquad \text{pour } S_0$$

$$t_0 + \frac{3}{F} + k \ 64 \ \mu s, \qquad t_0 + \frac{4}{F} + k \ 64 \ \mu s \ \text{et} \qquad t_0 + \frac{5}{F} + k \ 64 \ \mu s \qquad \text{pour } S_1$$

$$t_0 + \frac{6}{F} + k \ 64 \ \mu s, \qquad t_0 + \frac{7}{F} + k \ 64 \ \mu s \ \text{et} \qquad t_0 + \frac{8}{F} + k \ 64 \ \mu s \qquad \text{pour } S_2, ... \text{ etc.}$$

La fréquence d'horloge F que l'on doit utiliser dans ces dixième et onzième modes de réalisation est donc égale au minimum à 3 M fois la fréquence $F_I$.

Bien entendu, dans les équations (17) à (20) précédentes, on a toute liberté pour choisir pour sorties $a_i$, $b_j$, $c_k$ soit des sorties directes des registres soit, pour partie ou totalité de ces coefficients, des compléments à 1 de ces sorties directes, compléments qui sont également disponibles dans la majorité des réalisations pratiques des registres à décalage.

Dans les cinquième à onzième modes de réalisation selon l'invention, il y a intérêt à ce que les séquences des adresses pseudoaléatoires soient les plus longues possibles, pour rendre le chiffrement le plus efficace. Une première condition est de choisir les longueurs $n_a$, $n_b$ et $n_c$ des registres telles que les longueurs des séquences que ces dernières fournissent, respectivement égales à $(2^{n_a}-1)$, $(2^{n_b}-1)$, et $(2^{n_c}-1)$, soient premières entre elles. La longueur des séquences de combinaisons de bits provenant des trois registres est alors maximale et égale au produit:

$$(2^{n_a}-1)(2^{n_b}-1)(2^{n_c}-1) \qquad (21)$$

dont la valeur est voisine de $2^{n_a+n_b+n_c} = 2^{n_d}$

Dans les cinquième, sixième et septième modes de réalisation selon l'invention, les coefficients des adresses sont calculés à partir de M sorties successives des registres. On pourrait donc retrouver les mêmes adresses en sorties toutes les

$$\frac{(2^{n_a}-1)(2^{n_b}-1)(2^{n_c}-1)}{M} \text{adresses}$$

si le numérateur de cette fraction était divisible par M. On renforcera donc la sécurité du système par rapport à un décryptage illicite en faisant en sorte que M ne soit pas un diviseur de $(2^{n_a}-1)$, $(2^{n_b}-1)$ et $(2^{n_c}-1)$. Cette condition est toujours vérifiée quand M est égal à une puissance de 2 (M=4, 8,. ...); elle sera vérifiée quand M est divisible par 3, si $n_a$, $n_b$ et $n_c$ ne sont pas divisibles par 2; elle sera vérifiée quand M est divisible par 5, si $n_a$, $n_b$ et $n_c$ ne sont pas divisibles par 4; elle sera enfin vérifiée quand M est divisible par 7, si $n_a$, $n_b$ et $n_c$ ne sont pas divisibles par 3. En effet,

$$0\ 115\ 097$$

$$2^{2p}-1 \text{ est divisible par } 2^2-1=3$$

$$2^{3p}-1 \text{ est divisible par } 2^3-1=7$$

$$2^{4p}-1 \text{ est divisible par } 2^4-1=15=5\times3$$

et ainsi de suite.

Dans les huitième et neuvième modes de réalisation selon l'invention, les mêmes adresses pourraient revenir toutes les

$$\frac{(2^{n_a}-1)(2^{n_b}-1)(2^{n_c}-1)}{2M}\text{adresses}$$

si le numérateur était divisible par 2M. Comme le numérateur n'est jamais divisible par 2, les conditions de sécurité maximales sont donc identiques à ce qu'elles sont dans les cinquième, sixième et septième modes de réalisation.

Dans les dixième et onzième modes de réalisation selon l'invention, les mêmes adresses pourraient revenir toutes les

$$\frac{(2^{n_a}-1)(2^{n_b}-1)(2^{n_c}-1)}{3M}\text{adresses}$$

si le numérateur était divisible par 3M. Les conditions de sécurité maximales correspondent donc à celles précédemment décrites avec la condition supplémentaire que le numérateur ne soit jamais divisible par 3, ce qui revient à imposer à $n_a$, $n_b$ et $n_c$ d'être impairs.

Comme il peut arriver que certaines de ces conditions ne puissent pas être remplies, par exemple dans le cas où le nombre de bits de la clé $n_d=n_a+n_b+n_c$ est fixé et, en particulier, quand ce nombre est pair, on peut rendre encore la sécurité du système maximale en choisissant une fréquence d'échantillonnage F égale au produit de la fréquence $F_l$ par un nombre qui est premier avec $(2^{n_a}-1)$, $(2^{n_b}-1)$ et $(2^{n_c}-1)$, ce nombre étant bien entendu égal ou supérieur à M, pour les cinquième, sixième et septième modes de réalisation, à 2M pour les huitième et neuvième et à 3M pour les deux derniers modes de réalisation selon l'invention.

Si l'on se place dans le cas des deux derniers modes de réalisation, avec M=8 par exemple, la fréquence la plus faible que l'on puisse choisir est:

$$F=3M \cdot F_l=24 \cdot F_l=375 \text{ kHz}$$

Si la longueur $n_d$ de la clé est paire, l'un des registres aura aussi une longueur paire et sa séquence sera divisible par 3; on peut choisir alors comme fréquence

$$F=25 \cdot F_l=390,625 \text{ kHz}$$

Cependant, si on ne peut éviter que la longueur d'un des registres soit divisible par 4, sa séquence sera divisible par 5; on peut alors préférer choisir:

$$F=26 \cdot F_l=406,250 \text{ kHz}$$

En fait, on peut également choisir une fréquence qui ne soit pas un multiple de $F_l$ mais qui soit égale au produit de $F_l$ par une fraction simple; la sécurité du système sera alors maximale si le numérateur de cette fraction est premier avec $(2^{n_a}-1)$, $(2^{n_b}-1)$ et $(2^{n_c}-1)$. Dans l'exemple précédent, on peut choisir par exemple un numérateur égal à une puissance de 2:

$$F=\frac{128}{5}\times F_l=400 \text{ kHz}$$

La période 1/F est alors égale à 2,5 µs. Pour éviter les ambiguïtés de décomptage des bits d'horloge à partir du front de synchronisation ligne, il suffit, par exemple, d'assurer un délai de l'ordre de 0,25 µs entre le front de $F_l$ et celui de F pour une ligne donnée. Ce même délai se reproduira toutes les cinq lignes et, pour les lignes intermédiaires, il prendra une des valeurs 0,75, 1,25, 1,75 et 2,25 µs sans jamais être nul. On n'aura donc aucune difficulté à décompter, après chaque front de synchronisation ligne par exemple, les 24 premières valeurs des sorties nécessaires pour calculer les huit coefficients des adresses à partir de l'équation (19) ou de l'équation (20), en n'utilisant pas la 25ème valeur et, pour trois lignes sur cinq, la 26ème valeur des sorties.

16

## 0 115 097

On peut enfin choisir la fraction par laquelle on multiplie $F_I$ pour obtenir F de telle sorte que la fréquence horloge F soit égale à la fréquence horloge $F'$ utilisée pour déchiffrer les canaux audio numériques, ou soit dans un rapport simple avec cette fréquence $F'$. Le générateur d'adresses numériques pseudo-aléatoires pourra alors être commun au déchiffrement du canal vidéo et au déchiffrement du ou des canaux audio associés à l'image.

### Revendications

1. Générateur d'adresses numériques pseudoaléatoires, destiné notamment à fournir des adresses de points de coupure d'un signal vidéo composite, dans le cas d'un système à multiplexage en fréquences de type SECAM, PAL ou NTSC par exemple, ou des adresses de points de coupure des signaux vidéo de luminance et de chrominance dans le cas d'un système à multiplexage temporel des composantes analogiques de type MAC par exemple, en vue de réaliser un chiffrage de ces signaux vidéo par permutation circulaire des deux segments situés de part et d'autre de chaque point de coupure, caractérisé en ce qu'il comprend trois registres à décalage à rebouclage, en ce que les polynômes générateurs de chacun de ces registres sont irréductibles et primitifs pour que les séquences de bits a, b, c qu'ils délivrent soient de longueurs maximales, en ce que les nombres de cellules $n_a$, $n_b$, $n_c$ desdits registres sont différents, en ce que les trois registres comportent plusieurs sorties $a_i$ $b_j$ et $c_k$, et en ce que les adresses des points de coupure sont constituées par des sommes de N termes de poids $2^0$ à $2^{N-1}$ et de coefficients respectifs $S_0$ à $S_{N-1}$ dont au moins les quatre coefficients de poids le plus fort sont déduits d'équations logiques comportant au moins une addition modulo 2 de trois sorties $a_i$ $b_j$ et $c_k$, notée $(a_i \oplus b_j \oplus c_k)$, les rangs i, j et k étant choisis différents autant que les degrés $n_a$, $n_b$ et $n_c$ des registres le permettent, et les autres coefficients étant indifféremment soit fixes, et alors égaux à 0 ou à 1, soit déduits pour l'un ou plusieurs d'entre eux de sorties $a_i$ $b_j$ et $c_k$ à l'aide d'équations logiques ne comportant pas d'addition modulo 2 de trois sorties.

2. Générateur d'adresses numériques pseudoaléatoires, destiné notamment à fournir des adresses de points de coupure d'un signal vidéo composite, dans le cas d'un système à multiplexage en fréquences de type SECAM, PAL ou NTSC par exemple, ou des adresses de points de coupure des signaux vidéo de luminance et de chrominance dans le cas d'un système à multiplexage temporel des composantes analogiques de type MAC par exemple, en vue de réaliser un chiffrage de ces signaux vidéo par permutation circulaire des deux segments situés de part et d'autre de chaque point de coupure, caractérisé en ce qu'il comprend trois registres à décalage à rebouclage, en ce que les polynômes générateurs de chacun de ces registres sont irréductibles et primitifs pour que les séquences de bits a, b, c qu'ils délivrent soient de longueurs maximales, en ce que les nombres de cellules $n_a$, $n_b$, $n_c$ desdits registres sont différents, en ce que les trois registres comportent plusieurs sorties $a_i$ $b_j$ et $c_k$, et en ce que les adresses des points de coupure sont constituées par des sommes de N termes de poids $2^0$ à $2^{N-1}$ et de coefficients respectifs $S_0$ à $S_{N-1}$, et en ce que les M coefficients $S_0$ à $S_{M-1}$ de poids le plus fort sont fournis successivement par la sortie du générateur, qui fonctionne à une fréquence horloge égale ou supérieure à M fois la fréquence ligne du signal vidéo, cette sortie étant le résultat d'une équation logique qui comporte au moins deux additions modulo 2 de trois sorties $a_i$, $b_j$, $c_k$ des trois registres.

3. Générateur selon l'une des revendications 1 et 2, caractérisé en ce que les nombres de cellules $n_a$, $n_b$, $n_c$ sont choisis de telle sorte que les longueurs $(2^{n_a}-1)$, $(2^{n_b}-1)$ et $(2^{n_c}-1)$ des séquences délivrées par les registres sont premières entre elles.

4. Générateur selon la revendication 1 ou selon la revendication 3 lorsque celle-ci dépend de la revendication 1, caractérisé en ce que l'équation logique du coefficient de poids le plus fort comprend l'addition logique de deux produits logiques effectués l'un entre une sortie $a_i$ ou $\bar{a}_i$ du registre le plus long et une addition modulo 2 du type $(a_{i'} \oplus b_j \oplus c_k)$ et l'autre entre la sortie complémentaire $\bar{a}_i$ ou $a_i$ de ce registre et une addition modulo 2 du type $(\bar{a}_{i'} \oplus b_{j'} \oplus c_{k'})$ ou du type $(a_{i'} \oplus b_{j'} \oplus c_{k'})$, et en ce que l'équation logique d'au moins trois des autres coefficients de poids le plus fort suivants comprend une addition logique du type $(a_{i''} \oplus b_{j''} \oplus c_{k''})$, les sorties utilisées pour le premier coefficient et celles utilisées pour les coefficients suivants étant choisies différentes autant que les degrés $n_a$, $n_b$ et $n_c$ le permettent.

5. Générateur selon la revendication 1 ou selon la revendication 3 lorsque celle-ci dépend de la revendication 1, caractérisé en ce que les équations logiques des deux coefficients de poids le plus fort sont choisies selon les opérations définies dans la revendication 3, et en ce que l'équation logique d'au moins deux des autres coefficients de poids le plus fort comprend une addition logique du type $a_{i'} \oplus b_{j''} \oplus c_{k''}$ les sorties $a_i$ $a_{i''}$, $b_j$ $b_{j''}$, $c_k$ $c_{k'}$ utilisées pour les deux premiers coefficients et les sorties $a_{i'} b_{j''} c_{k''}$ utilisées pour les coefficients suivants étant choisies différentes autant que les degrés $n_a$, $n_b$, $n_c$ le permettent.

6. Générateur selon la revendication 1 ou selon la revendication 3 lorsque celle-ci dépend de la revendication 1, caractérisé en ce que les équations logiques des deux coefficients de poids le plus fort comprennent l'addition logique d'un produit $\bar{b}_j(a_i \oplus b_{j'} \oplus c_k)$ et d'un produit $b_j(a_{i'} \oplus b_{j'} \oplus c_{k'})$ ou $b_j(a_{i'} \oplus \bar{b}_{j'} \oplus c_{k'})$ pour l'un de ces coefficients et, pour l'autre de ces coefficients, l'addition logique d'un produit $c_{k''}(a_{i''} \oplus \bar{b}_{j''} \oplus c_{k'''})$ et d'un produit $c_{k''}(a_{i'''} \oplus b_{j'''} \oplus c_{k'''})$ ou $c_{k''}(a_{i'''} \oplus b_{j'''} \oplus \bar{c}_{k'''})$, en ce que les équations logiques d'au moins deux des coefficients de poids le plus fort suivants comprennent une addition logique du type $(a_{i''''} \oplus b_{j''''} \oplus c_{k''''})$, les sorties

17

$$a_i a_{i'} a_{i''} a_{i'''} b_j b_{j'} b_{j''} b_{j'''} c_k c_{k'} c_{k''} c_{k'''}$$

utilisées pour les deux premiers coefficients et les sorties $a_{i'''} b_{j'''} c_{k'''}$ utilisées pour les coefficients suivants étant choisies différentes autant que les degrés $n_a$, $n_b$, $n_c$ le permettent.

7. Générateur selon l'une des revendications 4 à 6, caractérisé en ce que le nombre d'adresses maximal possible $2^N$ est choisi égal à la première puissance de deux inférieure à la longueur M du signal.

8. Générateur selon l'une des revendications 4 à 6, caractérisé en ce que le nombre d'adresses maximal possible $2^N$ est choisi égal à la première puissance de deux supérieure à la longueur M du signal, et en ce que les $2^p$ adresses comprises entre $2^N - 2^p$ et $2^N - 1$ sont diminuées d'une quantité $2^q$, p étant choisi de telle sorte que $2^N - 2^p$ soit inférieur à M, et q étant choisi égal ou supérieur à p mais tel que $2^q$ soit inférieur à $2^N - 2^p$.

9. Générateur selon l'une des revendications 7 et 8, utilisable dans le cas où un fragment de signal ne doit pas subir la permutation circulaire, caractérisé en ce que les $2^r$ adresses comprises entre 0 et $2^r - 1$ sont augmentées d'une quantité $2^s$, r étant choisi de telle sorte que $2^r$ soit supérieur à la longueur L du segment de référence du signal qui ne doit pas être touché par la permutation circulaire, et s étant choisi au moins égal à r mais tel que $2^s$ soit inférieur à $M - 2^r$.

10. Générateur selon la revendication 1 ou selon la revendication 3 lorsque celle-ci dépend de la revendication 1, caractérisé en ce que, le signal à chiffrer étant de type à multiplexage temporel de f composantes analogiques g de longueur $M_g$ débutant chacune par une période de référence de longueur $L_g$ qui ne doit pas être incluse dans une permutation circulaire, des permutations circulaires indépendantes sont appliquées aux différentes composantes du signal après coupure de chacune, en ce que les f adresses des points de coupure sont calculées à partir des mêmes sorties $a_i$ $b_j$ $c_k$ des trois registres, et en ce que les équations logiques choisies pour déterminer les f adresses sont indépendantes et peuvent être de l'un quelconque des types d'équations logiques décrites dans les revendications précédentes.

11. Générateur selon l'une des revendications 4 à 10, caractérisé en ce que, à intervalles réguliers multiples de la période trame, une impulsion de synchronisation provenant d'une horloge interne ou transmise par l'émetteur recharge les trois mots de départ dans les registres à décalage, ces trois mots de départ de longueurs respectives $n_a$, $n_b$, $n_c$ constituant le clé de déchiffrage du système.

12. Générateur selon la revendication 11, caractérisé en ce que ces trois mots de départ mis bout à bout, constituent les $n_d = n_a + n_b + n_c$ bits de la clé, en ce que cette clé est stockée dans un quatrième registre à décalage à $n_d$ étages bouclé sur lui-même, en ce que le chargement des trois registres est effectué en ouvrant la ou les boucles de ces registres, en connectant les entrées des trois registres à trois prises du quatrième registre séparées respectivement par un nombre d'étages égal à $n_b$ et $n_c$, et en effectuant $n_d$ coups d'horloge, les trois registres étant ensuite déconnectés du quatrième registre et leurs boucles rétablies.

13. Générateur selon la revendication 12, caractérisé en ce que, lorsqu'une nouvelle clé fournie par une carte de décodage ou transmise par l'émetteur arrive, la boucle du quatrième registre est ouverte et son entrée est connectée au circuit qui délivre la clé, et en ce que l'on effectue $n_d$ coups d'horloge pour transférer les $n_d$ bits de la clé dans la quatrième registre, ce quatrième registre étant ensuite déconnecté du circuit qui délivre la clé et son bouclage rétabli.

14. Générateur selon la revendication 2, caractérisé en ce que les trois registres comportent chacun deux sorties notées $a_0$, $a_1$, $b_0$, $b_1$, $c_0$ et $c_1$ et en ce que l'équation logique est de la forme:

$$a_1(a_0 \oplus b_0 \oplus c_0) + \overline{a}_1(a_0 \oplus b_1 \oplus c_1)$$

ou

$$a_1(a_0 \oplus b_0 \oplus c_0) + \overline{a}_1(\overline{a_0 \oplus b_1 \oplus c_1})$$

les valeurs des six sorties étant mesurées au même instant.

15. Générateur selon la revendication 2, caractérisé en ce que le premier registre comporte 3 sorties notées $a_0$, $a_1$ et $a_2$, en ce que les deuxième et troisième registres comportent chacun deux sorties notées $b_0$, $b_1$, $c_0$ et $c_1$ et en ce que l'équation logique est de la forme:

$$a_2(a_0 \oplus b_0 \oplus c_0) + \overline{a}_2(a_1 \oplus b_1 \oplus c_1)$$

les valeurs des sept sorties étant mesurées au même instant.

16. Générateur selon la revendication 2, caractérisé en ce que les trois registres comportent chacun trois sorties notées $a_0$, $a_1$, $a_2$, $b_0$, $b_1$, $b_2$, $c_0$, $c_1$ et $c_2$ et en ce que l'équation logique comprend l'addition logique des trois produits logiques effectués entre deux additions modulo 2 de sorties différentes:

$$(a_0 \oplus b_0 \oplus c_0(a_1 \oplus b_1 \oplus c_1) + (a_1 \oplus b_1 \oplus c_1)(a_2 \oplus b_2 \oplus c_2) + (a_2 \oplus b_2 \oplus c_2(a_0 \oplus b_0 \oplus c_0)$$

les valeurs des neuf sorties étant mesurées au même instant.

17. Générateur selon la revendication 2, caractérisé en ce que les trois registres ne comportent qu'une sortie, en ce que la fréquence d'horloge F des registres est égale ou supérieure à 2M fois la fréquence ligne du signal vidéo, et en ce que l'équation logique est fonction de trois sorties $a_0$, $b_0$, $c_0$ à l'instant $t_0$ et de trois sorties $a_1$, $b_1$, $c_1$ à l'instant $t_0+1/F$ ou $t_0-1/F$ et est de la forme:

$$a_1(a_0 \oplus b_0 \oplus c_0) + \overline{a_1}(a_0 \oplus b_1 \oplus c_1)$$

ou

$$a_1(a_0 \oplus b_0 \oplus c_0) + \overline{a_1}(a_0 \oplus b_1 \oplus c_1).$$

18. Générateur selon la revendication 2, caractérisé en ce que le premier registre comporte deux sorties et les deuxième et troisième registres une sortie, en ce que la fréquence d'horloge F des registres est égale ou supérieure à 2M fois la fréquence ligne du signal vidéo, et en ce que l'équation logique est fonction des valeurs $a_0$, $b_0$, $c_0$ de trois sorties à l'instant $t_0$, des valeurs $a_1$, $b_1$, $c_1$ de ces trois mêmes sorties à l'instant $t_0+1/F$ et de la valeur $a_2$ de la deuxième sortie du premier registre à l'instant $t_0$ ou $t_0+1/F$ et est de la forme:

$$a_2(a_0 \oplus b_0 \oplus c_0) + \overline{a_2}(a_1 \oplus b_1 \oplus c_1).$$

19. Générateur selon la revendication 2, caractérisé en ce que les trois registres ne comportent qu'une sortie, en ce que la fréquence d'horloge F des registres est égale ou supérieure à 3M fois la fréquence ligne du signal vidéo, et en ce que l'équation logique est fonction de trois sorties $a_0$, $b_0$, $c_0$ à l'instant $t_0$, de trois sorties $a_1$, $b_1$, $c_1$ à l'instant $t_0+1/F$ et d'une sortie $a_2$ à l'instant $t_0+2/F$ ou $t_0-1/F$ et est de la forme:

$$a_2(a_0 \oplus b_0 \oplus c_0) + \overline{a_2}(a_1 \oplus b_1 \oplus c_1)$$

20. Générateur selon la revendication 2, caractérisé en ce que les trois registres ne comportent qu'une sortie, en ce que la fréquence d'horloge F des registres est égale ou supérieure à 3M fois la fréquence ligne du signal vidéo, et en ce que l'équation logique est fonction de trois sorties $a_0$, $b_0$, $c_0$ à l'instant $t_0$, de trois sorties $a_1$, $b_1$, $c_1$ à l'instant $t_0+1/F$ et de trois sorties $a_2$, $b_2$, $c_2$ à l'instant $t_0+2/F$ et est de la forme:

$$(a_0 \oplus b_0 \oplus c_0)(a_1 \oplus b_1 \oplus c_1) + (a_1 \oplus b_1 \oplus c_1)(a_2 \oplus b_2 \oplus c_2) + (a_2 \oplus b_2 \oplus c_2)(a_0 \oplus b_0 \oplus c_0)$$

21. Générateur selon l'une des revendications 14 à 20, caractérisé en ce que le nombre M de coefficients des adresses est égal à une puissance de 2.

22. Générateur selon l'une des revendications 14 à 21, caractérisé en ce que les nombres de cellules $n_a$, $n_b$ et $n_c$ sont choisis impairs.

23. Générateur selon l'une des revendications 14 à 20, caractérisé en ce que, le nombre M étant divisible par 5, les nombres de cellules $n_a$, $n_b$, $n_c$ sont choisis non divisibles par 4.

24. Générateur selon l'une des revendications 14 à 20, caractérisé en ce que, le nombre M étant divisible par 7, les nombres de cellules $n_a$, $n_b$ et $n_c$ sont choisis non divisibles par 3.

25. Générateur selon l'une des revendications 14 à 22, caractérisé en ce que la fréquence d'horloge est choisie égale au produit de la fréquence ligne du signal vidéo par un nombre qui est premier avec $(2^{n_a}-1)$, $(2^{n_b}-1)$ et $(2^{n_c}-1)$ ou par une fraction simple dont le numérateur est premier avec $(2^{n_a}-1)$, $(2^{n_b}-1)$ et $(2^{n_c}-1)$.

26. Générateur selon l'une des revendications 14 à 22, caractérisé en ce que la fréquence d'horloge F est choisie égale au produit de la fréquence ligne du signal vidéo par une fraction telle que cette fréquence F coïncide avec la fréquence F' utilisée pour le déchiffrement des canaux audio numériques ou est dans un rapport simple avec cette fréquence F'.

**Patentansprüche**

1. Generator für binäre Pseudozufallsadressen, insbesondere bestimmt zum Erzeugen von Trennstellenadressen für ein Videosignalgemisch im Falle eines Frequenzmultiplexsystems vom Typ SECAM, PAL oder NTSC zum Beispiel, oder von Trennstellenadressen für Leuchtdichte- und Farbartsignale im Falle eines Zeitmultiplexsystems für analoge Signalenteile beispielsweise vom Type MAC zur Verwirklichung einer Codierung dieser Videosignale durch zyklische Verschiebung der beiden, an jeder Seite jeder Trennstelle befindlichen Segmente, dadurch gekennzeichnet, dass der Generator drei Rückkopplungs-Schieberegister enthält, dass die Erzeugerpolynome jedes dieser Register unzelegbar und primitiv sind, damit die von ihnen gelieferten Bitfolgen a, b und c die maximale Länge besitzen, dass die Zellenanzahlen $n_a$, $n_b$, $n_c$ dieser Register verschieden sind, dass die drei Register mehrere Ausgänge $a_i$ $b_j$ und $c_k$ enthalten, und dass die Adressen der Trennstellen durch die N Gewichtssummanden $2^0$ bis $2^{N-1}$ und die jeweiligen Koeffizienten $S_0$ bis $S_{N-1}$ gebildet werden, von denen wenigstens die vier Koeffizienten mit grösster Wertigkeit von logischen Gleichungen mit wenigstens einer Modulo-2-Addition von drei Ausgängen $a_i$ $b_j$ und $c_k$ abgeleitet werden, die die Bezeichnung $(a_i \oplus b_j \oplus c_k)$ haben, wobei die Datenebenen i, j und k, sofern es die Grade $n_a$, $n_b$ und $n_c$ der Register erlauben, verschieden gewählt werden und die anderen Koeffizienten entweder fest, also gleich 0 oder 1 sind, oder für einen oder mehrere der Koeffizienten mit Hilfe logischer Gleichungen ohne die Modulo-2-Addition von drei Ausgängen aus den Ausgängen $a_i$ $b_j$ und $c_k$ abgeleitet werden.

2. Generator für binäre Pseudozufallsadressen, insbesondere bestimmt zum Erzeugen von Trennstellenadressen eines Videosignalgemisches bei einem Frequenzmultiplexsystem vom Typ SECAM, PAL oder NTSC zum Beispiel, oder von Trennstellenadressen für Leuchtdichte- und Farbartsignale bei einem Zeitmultiplexsystem für analoge Signalanteile beispielsweise vom Typ MAC zur Verwirklichung einer Codierung dieser Videosignale durch zyklische Verschiebung der beiden, an jeder Seite jeder Trennstelle befindlichen Segmente, dadurch gekennzeichnet, dass der Generator drei Rückkopplungsschieberegister enthält, dass die Erzeugerpolynome jedes dieser Register unzerlegbar und primitiv sind, damit die von ihnen gelieferten Bitfolgen a, b und c die maximale Länge haben, dass die Zellenanzahlen $n_a$, $n_b$, $n_c$ dieser Register verschieden sind, dass die drei Register mehrere Ausgänge $a_i$ $b_j$ und $c_k$ enthalten, und dass die Adressen der Trennstellen durch die N Gewichtssummanden $2^0$ bis $2^{N-1}$ und die jeweiligen Koeffizienten $S_0$ bis $S_{N-1}$ gebildet werden, und dass die M Koeffizienten $S_0$ bis $S_{M-1}$ mit grösster Wertigkeit aufeinanderfolgend am Ausgang des Generators zur Verfügung stehen, der mit einer Taktfrequenz höher als oder gleich dem M-fachen der Zeilenfrequenz des Videosignals arbeitet, wobei dieser Ausgang das Ergebnis einer logischen Gleichung ist, die zumindest zwei Modulo-2-Additionen von drei Ausgängen $a_i$, $b_j$, $c_k$ der drei Register enthält.

3. Generator nach einem der Ansprüche 1 und 2, dadurch gekennzeichnet, dass die Zellenanzahlen $n_a$, $n_b$, $n_c$ derart gewählt sind, dass die Längen $(2^{n_a}-1)$, $(2^{n_b}-1)$ und $(2^{n_c}-1)$ der von der Registern gelieferten Folgen die untereinander unteilbar sind.

4. Generator nach Anspruch 1 oder nach Anspruch 3, wenn in Abhängigkeit von Anspruch 1, dadurch gekennzeichnet, dass die logische Gleichung der Koeffizienten mit grösster Wertigkeit die logische Addition von zwei logischen Produkten enthält, von denen eines zwischen einem Ausgang $a_i$ oder $\overline{a}_i$ des längsten Registers und einer Modulo-2-Addition vom Typ $(\overline{a_{i'}\oplus b_{j'}\oplus c_{k'}})$ oder vom Typ $(a_{i'}\oplus b_{j'}\oplus c_{k'})$ und das andere Produkt zwischen dem komplementären Ausgang $\overline{a}_{i'}$ oder $a_i$ dieses Registers und einer Modulo-2-Addition vom Typ $(\overline{a_{i'}\oplus b_{j'}\oplus c_{k'}})$ oder vom Typ $(a_{i'}\oplus b_{j'}\oplus c_{k'})$ bewirkt wird, und dass die logische Gleichung von mindestens drei der anderen Koeffizienten mit grösster Wertigkeit eine logische Addition vom Typ $(a_{i''}\oplus b_{j''}\oplus c_{k''})$ enthält, wobei die für den ersten Koeffizienten benutzten Ausgänge und die für die folgenden Koeffizienten benutzten Ausgänge verschieden gewählt werden, insofern es die Grade $n_a$, $n_b$ und $n_c$ erlauben.

5. Generator nach Anspruch 1 oder nach Anspruch 3, wenn abhängig vom Anspruch 1, dadurch gekennzeichnet, dass die logischen Gleichungen der zwei Koeffizienten mit grösster Wertigkeit entsprechend im Anspruch 3 abgegrenzten Vergängen gewählt werden, und dass die logische Gleichung von zumindest zwei anderen Koeffizienten mit grösster Wertigkeit eine logische Addition vom Typ $a_{i''}\oplus b_{j''}\oplus c_{k''}$ enthält, wobei die Ausgänge $a_i a_{i'} b_j b_{j'} c_k c_{k'}$ für die zwei ersten Koeffizienten und die Ausgänge $a_{i''} b_{j''} c_{k''}$ für die folgenden Koeffizienten verschieden gewählt werden, insofern es die Grade $n_a$, $n_b$ und $n_c$ erlauben.

6. Generator nach Anspruch 1 oder nach Anspruch 3, wenn abhängig vom Anspruch 1, dadurch gekennzeichnet, dass die logischen Gleichungen der zwei Koeffizienten mit grösster Wertigkeit die logische Addition eines Produkts $\overline{b}_j$ $(a_i\oplus b_{j'}\oplus c_{k'})$ und eines Produkts $b_j(a_{i'}\oplus b_{j'}\oplus c_{k'})$ oder $b_j(a_{i'}\oplus \overline{b}_{j'}\oplus c_{k'})$ für einen dieser und für den anderen dieser Koeffizienten die logische Addition eines Produkts $c_{k''}(a_{i''}\oplus \overline{b}_{j''}\oplus c_{k'''})$ und eines Produkts $c_{k''}(a_{i'''}\oplus b_{j''}\oplus c_{k'''})$ oder $c_{k''}(a_{i'''}\oplus b_{j''}\oplus \overline{c_{k'''}})$ enthalten, dass die logischen Gleichungen von zumindest zwei der folgenden Koeffizienten mit grösster Wertigkeit eine logische Addition vom Typ $(a_{i''''}\oplus b_{j''''}\oplus c_{k''''})$ enthalten, wobei die Ausgänge

$$a_i a_{i'} a_{i''} a_{i'''} b_j b_{j'} b_{j''} b_{j'''} c_k c_{k'} c_{k''} c_{k'''}$$

für die zwei ersten Koeffizienten und die Ausgänge $a_{i''''} b_{j''''} c_{k''''}$ für die folgenden Koeffizienten verschieden gewählt werden, sofern die Grade $n_a$, $n_b$ und $n_c$ es erlauben.

7. Generator nach einem der Ansprüche 4 bis 6, dadurch gekennzeichnet, dass die möglichst grosse Adresszahl $2^N$ gleich der ersten Potenz von zwei kleiner als die Länge M des Signals gewählt wird.

8. Generator nach einem der Ansprüche 4 bis 6, dadurch gekennzeichnet, dass die möglichst grosse Adresszahl $2^N$ gleich der ersten Potenz von zwei grösser als die Länge M des Signals gewählt wird, und dass die $2^P$ Adressen zwischen $2^N-2^P$ und $2^N-1$ um eine Menge $2^q$ verringert werden, worin p derart gewählt wird, dass $2^N-2^P$ kleiner als M ist, und q höher als oder gleich p gewählt wird, aber derart, dass $2^q$ kleiner als $2^N-2^P$ ist.

9. Generator nach einem der Ansprüche 7 und 8, verwendbar im Fall, wenn ein Signalbruchteil die zyklische Verschiebung nicht erfahren soll, dadurch gekennzeichnet, dass die $2^r$ Adressen zwischen 0 und $2^r-1$ um eine Menge $2^s$ erhöht werden, worin r derart gewählt wird, dass $2^r$ grösser als die Länge L des Signalreferenzsegments ist, das nicht von der zyklischen Verschiebung berührt wird, und wobei s wenigstens gleich r ist, aber derart, dass $2^s$ kleiner als $M-2^r$ ist.

10. Generator nach Anspruch 1 oder nach Anspruch 3, wenn abhängig vom Anspruch 1, dadurch gekennzeichnet, dass das zu codierende Signal vom Zeitmultiplextyp mit f analogen Signalanteilen g mit einer Länge $M_g$ ist, die mit je einer Referenzperiode der Länge $L_g$ anfangen, die nicht in eine zyklische Verschiebung aufgenommen werden soll, unabhängige zyklische Verschiebungen nach dem Auftrennen eines jeden Signalanteiles auf die verschiedenen Signalanteile angesetzt werden, dass die f Adressen der Trennstellen ausgehend von den gleichen Ausgängen $a_i$ $b_j$ $c_k$ der drei Register berechnet werden, und dass die gewählten logischen Gleichungen zum Bestimmen der f Adressen unabhängig sind und irgendeine der in den vorangehenden Ansprüchen beschriebenen, logischen Gleichungstypen sein können.

11. Generator nach einem der Ansprüche 4 bis 10, dadurch gekennzeichnet, dass in regelmässigen Zeitintervallen, die Vielfache der Halbbildperiode sind, ein aus einem inneren Taktgeber abgeleiteter oder vom Sender übertragener Synchronisationsimpuls die drei Anfangswörter in die Schieberegister eingibt, wobei die drei Anfangswörter mit Längen von $n_a$, $n_b$ bzw. $n_c$ den Decodierungsschlüssel des Systems darstellen.

12. Generator nach Anspruch 11, dadurch gekennzeichnet, dass die drei mit den Enden aneinander gestellten Anfangswörter die $n_d = n_a + n_b + n_c$ Bits des Schlüssels darstellen, dass dieser Schlüssel in einem vierten Schieberegister auf $n_d$ in sich verschleiften Stufen gespeichert ist, dass das Laden der drei Register durch Öffnen der Schleife(n) dieser Register und durch gleichzeitiges Verbinden der drei Register mit drei Anzapfungen des vierten Registers, die durch eine Anzahl von Stufen gleich $n_b$ bzw. $n_c$ voneinander getrennt sind, und nach $n_d$ Taktimpulsen erfolgt, wonach die drei Register vom vierten Register abgekoppelt und ihre Schleifen wiederhergestellt werden.

13. Generator nach Anspruch 12, dadurch gekennzeichnet, dass, wenn ein neuer von einer Decodierungskarte gelieferter oder vom Sender übertragener Schlüssel ankommt, die Schleife des vierten Registers geöffnet ist und sein Eingang an der den Schlüssel liefernden Schaltung liegt, und dass $n_d$ Taktimpulse zum Übertragen der $n_d$ Bits des Schlüssels auf das vierte Register erscheinen, das darauf von der Schaltung abgekoppelt und seine Schleife wiederhergestellt wird.

14. Generator nach Anspruch 2, dadurch gekennzeichnet, dass die drei Register je zwei Ausgänge mit den Bezeichnungen $a_0$, $a_1$, $b_0$, $b_1$, $c_0$, $c_1$ enthalten, und dass die logische Gleichung folgende Form hat:

$$a_1(a_0 \oplus b_0 \oplus c_0) + \overline{a_1}(a_0 \oplus b_1 \oplus c_1)$$

oder

$$a_1(a_0 \oplus b_0 \oplus c_0) + \overline{a_1}(\overline{a_0} \oplus b_1 \oplus c_1),$$

wobei die Werte der sechs Ausgänge gleichzeitig gemessen werden.

15. Generator nach Anspruch 2, dadurch gekennzeichnet, dass das erste Register 3 Ausgänge mit den Bezeichnungen $a_0$, $a_1$ und $a_2$ enthält, dass die zweiten und dritten Register je zwei Ausgänge mit den Bezeichnungen $b_0$, $b_1$, $c_0$ und $c_1$ enthalten und dass die logische Gleichung folgende Form hat:

$$a_2(a_0 \oplus b_0 \oplus c_0) + \overline{a_2}(a_1 \oplus b_1 \oplus c_1),$$

wobei die Werte der sieben Ausgänge gleichzeitig gemessen werden.

16. Generator nach Anspruch 2, dadurch gekennzeichnet, dass die drei Register je drei Ausgänge mit den Bezeichnungen $a_0$, $a_1$, $a_2$, $b_0$, $b_1$, $b_2$, $c_0$, $c_1$ und $c_2$ enthalten, und dass die logische Gleichung die logische Addition der drei zwischen zwei Modulo-2-Additionen verschiedener Ausgänge durchgeführten, logischen Produkte enthält:

$$(a_0 \oplus b_0 \oplus c_0)(a_1 \oplus b_1 \oplus c_1) + (a_1 \oplus b_1 \oplus c_1)(a_2 \oplus b_2 \oplus b_2 \oplus c_2) + (a_2 \oplus b_2 \oplus c_2)(a_0 \oplus b_0 \oplus c_0),$$

wobei die Werte der neun Ausgänge gleichzeitig gemessen werden.

17. Generator nach Anspruch 2, dadurch gekennzeichnet, dass die drei Register nur einen Ausgang haben, dass die Taktfrequenz F der Register höher als oder gleich dem 2M-fachen der Zeilenfrequenz des Videosignals ist, und dass die logische Gleichung zum Zeitpunkt $t_0$ eine Funktion von drei Ausgängen $a_0$, $b_0$ und $c_0$ und zum Zeitpunkt $t_0 + 1/F$ oder $t_0 - 1/F$ eine Funktion von drei Ausgängen $a_1$, $b_1$ und $c_1$ ist und folgende Form hat:

$$a_1(a_0 \oplus b_0 \oplus c_0) + \overline{a_1}(a_0 \oplus b_1 \oplus c_1)$$

oder

$$a_1(a_0 \oplus b_0 \oplus c_0) + \overline{a_1}(\overline{a_0} \oplus b_1 \oplus c_1).$$

18. Generator nach Anspruch 2, dadurch gekennzeichnet, dass das erste Register zwei Ausgänge hat und die zweiten und dritten Register einen Ausgang haben, dass die Taktfrequenz F der Register höher als oder gleich dem 2M-fachen der Zeilenfrequenz des Videosignals ist, und dass die logische Gleichung zum Zeitpunkt $t_0$ eine Funktion der Werte $a_0$, $b_0$, $c_0$ von drei Ausgängen, zum Zeitpunkt $t_0 + 1/F$ eine Funktion der Werte $a_1$, $b_1$, $c_1$ dieser selben drei Ausgänge und zum Zeitpunkt $t_0$ oder $t_0 + 1/F$ eine Funktion des Wertes $a_2$ des zweiten Ausgangs des ersten Registers ist und folgende Form hat:

$$a_2(a_0 \oplus b_0 \oplus c_0) + \overline{a_2}(a_1 \oplus b_1 \oplus c_1).$$

19. Generator nach Anspruch 2, dadurch gekennzeichnet, dass die drei Register nur einen Ausgang haben, dass die Taktfrequenz F der Register höher als oder gleich dem 3M-fachen der Zeilenfrequenz des Videosignals ist, und dass die logische Gleichung zum Zeitpunkt $t_0$ eine Funktion von drei Ausgängen $a_0$, $b_0$, $c_0$, zum Zeitpunkt $t_0+1/F$ eine Funktion von drei Ausgängen $a_1$, $b_1$, $c_1$ und zum Zeitpunkt $t_0+2/F$ oder $t_0-1/F$ eine Funktion eines Ausgangs $a_2$ ist und folgende Form hat:

$$a_2(a_0 \oplus b_0 \oplus c_0) + \overline{a_2}(a_1 \oplus b_1 \oplus c_1).$$

20. Generator nach Anspruch 2, dadurch gekennzeichnet, dass die drei Register nur einen Ausgang haben, dass die Taktfrequenz F der Register höher als oder gleich dem 3M-fachen der Zeilenfrequenz des Videosignals ist, und dass die logische Gleichung zum Zeitpunkt $t_0$ eine Funktion von drei Ausgängen $a_0$, $b_0$, $c_0$, zum Zeitpunkt $t_0+1/F$ eine Funktion von drei Ausgängen $a_1$, $b_1$, $c_1$ und zum Zeitpunkt $t_0+2/F$ eine Funktion von drei Ausgängen $a_2$, $b_2$, $c_2$ ist und folgende Form hat:

$$(a_0 \oplus b_0 \oplus c_0)(a_1 \oplus b_1 \oplus c_1) + (a_1 \oplus b_1 \oplus c_1)(a_2 \oplus b_2 \oplus c_2) + (a_2 \oplus b_2 \oplus c_2)(a_0 \oplus b_0 \oplus c_0).$$

21. Generator nach einem der Ansprüche 14 bis 20, dadurch gekennzeichnet, dass die Anzahl M von adresskoeffizienten gleich einer Potenz von 2 ist.

22. Generator nach einem der Ansprüche 14 bis 21, dadurch gekennzeichnet, dass die Zellenanzahlen $n_a$, $n_b$ und $n_c$ ungleich gewählt werden.

23. Generator nach einem der Ansprüche 14 bis 20, dadurch gekennzeichnet, dass, wenn die Anzahl M durch 5 teilbar ist, die Zellenanzahlen $n_a$, $n_b$, $n_c$ derart gewählt werden, dass sie nicht durch 4 teilbar sind.

24. Generator nach einem der Ansprüche 14 bis 20, dadurch gekennzeichnet, dass, wenn die Anzahl M durch 7 teilbar ist, die Zellenanzahlen $n_a$, $n_b$, $n_c$ derart gewählt werden, dass sie nicht durch 3 teilbar sind.

25. Generator nach einem der Ansprüche 14 bis 22, dadurch gekennzeichnet, dass die Taktfrequenz gleich dem Produkt der Zeilenfrequenz des Videosignals durch eine Anzahl gewählt wird, die bei $(2^{n_a}-1)$, $(2^{n_b}-1)$ und $(2^{n_c}-1)$ eine Primzahl ist, oder durch einen einfachen Bruch, dessen Zähler bei $(2^{n_a}-1)$, $(2^{n_b}-1)$ und $(2^{n_c}-1)$ eine Primzahl ist.

26. Generator nach einem der Ansprüche 14 bis 22, dadurch gekennzeichnet, dass die Taktfrequenz F gleich dem Produkt der Zeilenfrequenz des Videosignals durch einen derartigen Bruch gewählt wird, dass diese Frequenz F mit der für die Decodierung der binären Audiokanäle benutzten Frequenz F' zusammenfällt oder in einfachem Verhältnis zu dieser Frequenz F' steht.

## Claims

1. A pseudo-random binary address generator, designed notably for supplying addresses of cutting points of a composite video signal, in the case of a frequency-division multiplexing system of the type SECAM, PAL or NTSC for example, or addresses of cutting points of luminance and chrominance video signals in the case of a time-division multiplexing system for analog components of the type MAC, for example, for the purpose of the encoding of these video signals by rotation of the two segments situated on either side of each cutting point, characterized in that comprised therein are three feedback shift registers, in that the generating polynomials of each of these registers are irreducible and primitive in order that the bit sequences a, b, c which they deliver shall be of maximum length, in that the numbers of the cells $n_a$, $n_b$, $n_c$ in the said registers are different, in that the three registers have several outputs $a_i$, $b_j$ and $c_k$, and in that the addresses of the cutting points are constituted by sums of N terms of weight $2^0$ to $2^{N-1}$ and of respective coefficients $S_0$ to $S_{N-1}$ of which at least the four strongest weight coefficients are deduced from logic equations comprising at least a modulo 2 addition of three outputs $a_i$ $b_j$ and $c_k$, denoted $(a_i \oplus b_j \oplus c_k)$ the ranks i, j and k being chosen different as far as permitted by the degrees $n_a$, $n_b$ and $n_c$ of the registers, and the other coefficients being optionally fixed, in which case they are equal to 0 or to 1, or deduced for one or several among them from outputs $a_i$ $b_j$ and $c_k$ with the aid of logic equations not comprising modulo 2 addition of the three outputs.

2. A pseudo-random binary address generator, designed in particular to deliver cutting point addresses of a composite video signal in the case of a frequency-division multiplexing system of the type SECAM, PAL or NTSC for example, or cutting point addresses of luminance and chrominance video signals in the case of a time-division multiplexing system of analogue components of the type MAC for example, for the purpose of encoding these video signals by rotation of the two segments situated on either side of each cutting point, characterized in that there are comprised three feedback shift registers in that the generating polynomials of each of these registers are irreducible and primitive in order that the bit sequences a, b, c which they deliver shall be of maximum length, in that the numbers of the cells $n_a$, $n_b$, $n_c$ of the said registers are different, in that the three registers have several outputs $a_i$ $b_j$ and $c_k$, and in that the addresses of the cutting points are constituted by the sums of N terms of weight $2^0$ to $2^{N-1}$ and of respective coefficients $S_0$ to $S_{N-1}$, and in that the M strongest weight coefficients $S_0$ to $S_{M-1}$ are successively supplied by the output of the generator which operates at a clock frequency which is equal to or larger than M times the line frequency of the video signal, said output resulting from a logic equation comprising at least two modulo-2-additions of three outputs $a_i$ $b_j$, $c_k$ of the three registers.

22

3. A generator as claimed in Claim 1 or 2, characterized in that the numbers of the cells $n_a$, $n_b$, $n_c$ are chosen in such a way that the lengths $(2^{n_a}-1)$, $(2^{n_b}-1)$ and $(2^{n_c}-1)$ of the sequences delivered by the registers are primes.

4. A generator as claimed in Claim 1 or in Claim 3 when appendant to Claim 1, characterized in that the logic equation of the strongest weight coefficient comprises the logic addition of two logic products, one of them being effected between an output $a_i$ or $\bar{a}_i$ of the longest register and a modulo 2 addition of the type $(a_{i'}\oplus b_{j'}\oplus c_{k'})$ and the other between the complementary $(a_{i'}\oplus b_{j'}\oplus c_{k'})$ or of the type $(a_{i'}\oplus b_{j'}\oplus c_{k'})$, and in that the logic equation of at least three of the other following coefficients of strongest weight comprise a logic addition of the type $(a_{i''}\oplus b_{j''}\oplus c_{k''})$, the outputs used for the first coefficient and those used for the subsequent coefficients being chosen different as far as permitted by the degrees $n_a$, $n_b$ and $n_c$.

5. A generator as claimed in Claim 1 or Claim 3 when appendant to Claim 1, characterized in that the logic equations of the two coefficients of strongest weight are chosen in accordance with the operations defined in Claim 3, and in that the logic equation of at least two of the other coefficients of strongest weight comprises a logic addition of the type $a_{i''}\oplus b_{j''}\oplus c_{k''}$, the outputs $a_i a_{i'}$, $b_j$, $b_{j'}$, $c_k$ $c_{k'}$, used for the two first coefficients and the outputs $a_{i''} b_{j''} c_{k''}$ used for the subsequent coefficients, being chosen different as far as permitted by the degrees $n_a$, $n_b$, $n_c$.

6. A generator as claimed in Claim 1 or Claim 3 when appendant to Claim 1 characterized in that the logic equations of the two coefficients of strongest weight comprise the logic addition of a product $\bar{b}_j$ $(a_i\oplus b_j\oplus c_k)$ and a product $b_j$ $(a_{i'}\oplus b_{j'}\oplus c_{k'})$ or $b_j$ $(a_{i'}\oplus \bar{b}_{j'}\oplus c_{k'})$ for one of these coefficients and, for the other coefficient, the logic addition of a product $c_{k''}$ $(a_{i'}\oplus \bar{b}_{j''}\oplus c_{k'''})$ and a product $c_{k''}$ $(a_{i'''}\oplus b_{j'''}\oplus c_{k'''})$ or $c_{k''}$ $(a_{i'''}\oplus b_{j'''}\oplus \bar{c}_{k'''})$, and in that the logic equations of at least two of the coefficients of strongest weight that follow comprise a logic addition of the type $(a_{i''''}\oplus b_{j''''}\oplus c_{k''''})$, the outputs

$$a_i a_{i'} a_{i''} a_{i'''} b_j b_{j'} b_{j''} b_{j'''} c_k c_{k'} c_{k''} c_{k'''},$$

used for the two first coefficients and the outputs $a_{i''''} b_{j''''} c_{k''''}$ used for the coefficients that follow being chosen different as far as permitted by the degrees $n_a$, $n_b$, $n_c$.

7. A generator as claimed in one of the Claims 4 to 6, characterized in that the maximum possible number of addresses $2^N$ is chosen equal to the first power of two less than the length M of the signal.

8. A generator as claimed in one of the Claims 4 to 6, characterized in that the maximum possible number of addresses $2^N$ is chosen equal to the first power of two greater than the length M of the signal and in that the $2^p$ addresses comprised between $2^N-2^p$ and $2^N-1$ are reduced by a quantity $2^q$, p being chosen in such a way that $2^N-2^p$ are less than M, and q being chosen equal to or greater than p but such that $2^q$ is less than $2^N-2^p$.

9. A generator as claimed in one of the Claims 7 and 8, usable in the case where a fragment of the signal is not to be subjected to rotation, characterized in that the $2^r$ addresses comprised between 0 and $2^r-1$ are increased by a quantity $2^s$, r being chosen in such a way that $2^r$ is greater than the length L of the reference segment of the signal which is not to be subjected to rotation, and s being chosen at least equal to r but such that $2^s$ is less than $M-2^r$.

10. A generator as claimed in Claim 1 or Claim 3 when appendant to Claim 1, characterized in that the signal to be encoded being of the time-division multiplexing type of f analog components g of length $M_g$ each beginning with a reference period of length $L_g$ which is not to be included in a rotation, independent rotations are applied to the different components of the signal after a cutting in each one, in that the f addresses of the cutting points are calculated from the same outputs $a_i$ $b_j$ $c_k$ of the three registers, and in that the logic equations chosen for determining the f addresses are independent and may be any one of the types of logic equations described in the preceding Claims.

11. A generator as claimed in one of the Claims 4 to 10, characterized in that at regular intervals which are multiples of the frame period, a synchronization pulse derived from an internal clock or sent out by the transmitter reloads the three initial words in the shift registers, these three initial words of respective lengths $n_a$, $n_b$, $n_c$ constituting the decoding key of the system.

12. A generator as claimed in Claim 11, characterized in that these three initial words placed end to end constitute the $n_d=n_a+n_b+n_c$ bits of the key, in that this key is stored in a fourth shift register of $n_d$ stages with output to input feedback, in that the loading of the three registers is effected by opening the loop or loops of these registers, by connecting the inputs of the three registers to three taps on the fourth register separated respectively by a number of stages equal to $n_b$ and $n_c$, and by effecting $n_d$ clock pulses, the three registers subsequently being disconnected from the fourth register and their loops re-established.

13. A generator as claimed in Claim 12, characterized in that when a new key arrives, supplied by a decoding pad or sent out by the transmitter, the loop of the fourth register is open and its input is connected to the circuit that delivers the key, and in that $n_d$ clock pulses are supplied for transferring the $n_d$ bits of the key to the fourth register, which fourth register is subsequently disconnected from the circuit delivering the key and its loop re-established.

14. A generator as claimed in Claim 2, characterized in that the three registers each have two outputs denoted $a_0$, $a_1$, $b_0$, $b_1$, $c_0$, $c_1$ and in that the logic equation is of the form:

$$a_1(a_0\oplus b_0\oplus c_0)+\bar{a}_1(a_0\oplus b_1\oplus c_1)$$

or

$$a_1(a_0\oplus b_0\oplus c_0)+\overline{a_1}(\overline{a_0}\oplus b_1\oplus c_1)$$

the values of the six outputs being measured at the same instant.

15. A generator as claimed in Claim 2, characterized in that the first register has 3 outputs denoted $a_0$, $a_1$ and $a_2$, in that the second and third registers each have two outputs denoted $b_0$, $b_1$, $c_0$ and $c_1$ and in that the logic equation is of the form:

$$a_2(a_0\oplus b_0\oplus c_0)+\overline{a_2}(a_1\oplus b_1\oplus c_1)$$

the values of the seven outputs being measured at the same instant.

16. A generator as claimed in Claim 2, characterized in that the three registers each have three outputs denoted $a_0$, $a_1$, $a_2$, $b_0$, $b_1$, $b_2$, $c_0$, $c_1$ and $c_2$ and in that the logic equation comprises the logic addition of the three logic products effected between two modulo 2 additions of different outputs:

$$(a_0\oplus b_0\oplus c_0)(a_1\oplus b_1\oplus c_1)+(a_1\oplus b_1\oplus c_1)(a_2\oplus b_2\oplus c_2)+(a_2\oplus b_2\oplus c_2)(a_0\oplus b_0\oplus c_0)$$

the values of the nine outputs being measured at the same instant.

17. A generator as claimed in Claim 2, characterized in that the three registers have only one output, in that the clock frequency F of the registers is equal to or greater than 2M times the video signal line frequency, and in that the logic equation is a function of three outputs $a_0$, $b_0$, $c_0$ at the instant $t_0$ and of three outputs $a_1$, $b_1$, $c_1$ at the instant $t_0+1/F$ or $t_0-1/F$ and is of the form:

$$a_1(a_0\oplus b_0\oplus c_0)+\overline{a_1}(a_0\oplus b_1\oplus c_1)$$

or

$$a_1(a_0\oplus b_0\oplus c_0)+\overline{a_1}(\overline{a_0}\oplus b_1\oplus c_1).$$

18. A generator as claimed in Claim 2, characterized in that the first register has two outputs and the second and third registers one output, in that the clock frequency F of the registers is equal to or greater than 2M times the video signal line frequency, and in that the logic equation is a function of the values $a_0$, $b_0$, $c_0$ of three outputs at the instant $t_0$, of the values $a_1$, $b_1$, $c_1$ of these three same outputs at the instant $t_0+1/F$ and of the value $a_2$ of the second output of the first register at the instant $t_0$ or $t_0+1/F$ and is of the form:

$$a_2(a_0\oplus b_0\oplus c_0)+\overline{a_2}(a_1\oplus b_1\oplus c_1).$$

19. A generator as claimed in Claim 2, characterized in that the three registers have only one output, in that the clock frequency F of the registers is equal to or greater than 3M times the video signal line frequency, and in that the logic equation is a function of three outputs $a_0$, $b_0$, $c_0$ at the instant $t_0$, of three outputs $a_1$, $b_1$, $c_1$ at the instant $t_0+1/F$ and of one output $a_2$ at the instant $t_0+2/F$ or $t_0-1/F$ and is of the form:

$$a_2(a_0\oplus b_0\oplus c_0)+\overline{a_2}(a_1\oplus b_1\oplus c_1).$$

20. A generator as claimed in Claim 2, characterized in that the three registers have only one output in that the clock frequency F of the registers is equal to or greater than 3M times the video signal line frequency, and in that the logic equation is a function of three outputs $a_0$, $b_0$, $c_0$ at the instant $t_0$, of three outputs $a_1$, $b_1$, $c_1$ at the instant $t_0+1/F$ and of three outputs $a_2$, $b_2$, $c_2$ at the instant $t_0+2/F$ and is of the form

$$(a_0\oplus b_0\oplus c_0)(a_1\oplus b_1\oplus c_1)+(a_1\oplus b_1\oplus c_1)(a_2\oplus b_2\oplus c_2)+(a_2\oplus b_2\oplus c_2)(a_0\oplus b_0\oplus c_0).$$

21. A generator as claimed in one of the Claims 14 to 20, characterized in that the number M of the address coefficients is equal to a power 2.

22. A generator as claimed in one of the Claims 14 to 21, characterized in that the numbers of cells $n_a$, $n_b$ and $n_c$ are chosen odd.

23. A generator as claimed in one of the Claims 14 to 20, characterized in that the number M being divisible by 5, the numbers of cells $n_a$, $n_b$, $n_c$ are chosen non-divisible by 4.

24. A generator as claimed in one of the Claims 14 to 20, characterized in that the number M being divisible by 7, the numbers of cells $n_a$, $n_b$ and $n_c$ are chosen non-divisible by 3.

25. A generator as claimed in one of the Claims 14 to 22, characterized in that the clock frequency is chosen equal to the product of the video signal line frequency by a number which is prime with $(2^{n_a}-1)$, $(2^{n_b}-1)$ and $(2^{n_c}-1)$ or by a simple fraction whose numerator is prime with $(2^{n_a}-1)$, $(2^{n_b}-1)$ and $(2^{n_c}-1)$.

26. A generator as claimed in one of the Claims 14 to 22, characterized in that the clock frequency F is chosen equal to the product of the video signal line frequency by a fraction such that this frequency F coincides with the frequency F' used for decoding the binary audio channels or is in a simple relationship with this frequency F'.

FIG.1

FIG.2

FIG.3

FIG.4

FIG.5

FIG.6

FIG.7a

FIG. 7b

FIG.7a

0 115 097